# EUROPEAN PATENT SPECIFICATION

(11) **EP 3 326 225 B1**
(45) Date of publication and mention of the grant of the patent: **25.08.2021**
(21) Application number: 16724955.6
(22) Date of filing: 20.05.2016
(51) Int. Cl.: H01M 4/38, H01M 4/48, H01M 4/86, H01M 4/90, H01M 12/08

(54) **LITHIUM-OXYGEN BATTERY**
LITHIUM-SAUERSTOFF-BATTERIE
BATTERIE AU LITHIUM-OXYGÈNE

(30) Priority: 20.07.2015 GB 201512726
(43) Date of publication of application: 30.05.2018
(73) Proprietor: Nyobolt Limited, Cambridge CB4 0GA (GB)
(72) Inventor: GREY, Clare, Cambridge Cambridgeshire CB2 1EW (GB); LIU, Tao, Cambridge Cambridgeshire CB2 1EW (GB); YU, Wanjing, Cambridge Cambridgeshire CB2 1EW (GB)
(74) Representative: Mewburn Ellis LLP
(86) International application number: PCT/GB2016/051461
(87) International publication number: WO 2017/013379

(56) References cited:
- WO-A1-2016/036175
- US-A1- 2012 028 164
- WON-JIN KWAK ET AL: "Understanding the behavior of Li-oxygen cells containing LiI", JOURNAL OF MATERIALS CHEMISTRY A: MATERIALS FOR ENERGY AND SUSTAINABILITY, vol. 3, no. 16, 16 March 2015 (2015-03-16) , pages 8855-8864, XP055284546, GB ISSN: 2050-7488, DOI: 10.1039/C5TA01399B
- I. LANDA-MEDRANO ET AL: "Operando UV-visible spectroscopy evidence of the reactions of iodide as redox mediator in Li-O2 batteries", ELECTROCHEMISTRY COMMUNICATIONS, vol. 59, 2 July 2015 (2015-07-02), pages 24-27, XP055284568, NL ISSN: 1388-2481, DOI: 10.1016/j.elecom.2015.06.019

## Description

This invention was made with US Government support under prime contract DE-AC02-05CH11231 awarded by the United States Department of Energy. The US Government has certain rights in the invention.

### Related Application

The present case claims priority to, and the benefit of, GB 1512726.9 filed on 20 July 2015.

### Field of the Invention

The present invention provides methods for charging and discharging a lithium-oxygen battery, as well as a lithium-oxygen battery for use in such methods.

### Background of the Invention

Rechargeable non-aqueous Li-oxygen (O₂) batteries have attracted considerable interest over the past decade because of their much higher theoretical specific energy than conventional Li ion batteries (Girishkumar *et al.;* Bruce *et a*/*.;* Lu, *et al.*). A typical Li-air cell is comprised of a Li metal negative electrode, a non-aqueous Li⁺ electrolyte and a porous positive electrode. During discharge, O₂ is reduced and combines with Li⁺ at the positive electrode, forming insoluble discharge products (typically Li₂O₂) that fill up the porous electrode (Mitchell *et al.;* Adams *et a*/*.;* Gallant *et a*/*.* 2013). The porous electrode is not the active material, but rather a conductive, stable framework that hosts the reaction products. Therefore lighter electrode materials are favoured, so as to provide higher specific energies. During charge, the previously formed discharge products need to be thoroughly removed to prevent the cell from suffocating after a few discharge-charge cycles, the electrode pores becoming rapidly clogged with discharge products and products from unwanted side reactions (see, for example, Freunberger et al. J. Am. Chem. Soc*;* McCloskey et al. J. Phys. Chem. Lett. 2011; Freunberger et a/. Angew. Chem. Int. Ed.*;* McCloskey *et al.* 2012;Gallant *et al.* 2012; Ottakam Thotiyl et a/. J. Am. Chem. Soc.*;* Leskes *et al.*).

Several fundamental challenges still limit the practical realization of Li-oxygen batteries (Girishkumar *et al.;* Bruce, *et al.;* Lu, *et al.*). The first one relates to the reversible capacity (and thus energy density) of a Li-oxygen battery. This is determined by the pore volume of the porous electrode, which limits both the total quantity of the discharge products and how large the discharge product crystals can grow. The ultimate capacity - which is currently far from being reached - is, in theory, achieved in the extreme case where a large single crystal of the discharge product grows to occupy the full geometric volume of the positive electrode.

The mesoporous Super P (SP)/Ketjen carbon electrodes that are commonly used in the field have relatively small pore sizes and volumes, with their crystalline discharge products typically less than 2 µm in size (Girishkumar *et a*/*.;* Bruce *et a*/*;* Zhai, *et a*/*.*); this limits the capacity to < 5000 mAh/g_{c} (typically ∼1.5 mAh based on 1 mg of carbon and binder) (Freunberger et al. J. Am. Chem. Soc*;* McCloskey et al. J. Phys. Chem. Lett. 2011; Freunberger et al. Angew. Chem. Int. Ed.*;* McCloskey *et al.* 2012; Ottakam Thotiyl et a/. J. Am. Chem. Soc.*;* Leskes *et al.*). In addition, uses of smaller pores tend to lead to pore clogging, hindering the diffusion of O₂ and Li⁺ and causing high overpotentials during cycling.

The second issue involves the severe side reactions that occur on cycling, involving the electrode materials, electrolyte, and intermediate as well as final discharge products (Freunberger et a/. J. Am. Chem. Soc*;* McCloskey et al. J. Phys. Chem. Lett. 2011; Freunberger et al. Angew. Chem. Int. Ed.*;* McCloskey *et al.* 2012; Gallant *et al.* 2012; Ottakam Thotiyl et al. J. Am. Chem. Soc.*;* Leskes *et al.*). These decomposition reactions are thought to have two major origins, first, the superoxide ion that forms as an intermediate on reduction of oxygen readily attacks most electrolytes (Freunberger *et a*/*.;* McCloskey *et al.;* Freunberger *et al.;* Nasybulin *et a*/*.*), and second, the large overpotential on charge, which is often required to remove the insulating discharge products, results in oxidation of cell components such as the host electrode (McCloskey *et al.;* Gallant *et al.;* Ottakam Thotiyl et al. J. Am. Chem. Soc.*;* Leskes *et al.*). Studies suggest that 3.5 V (vs. Li/Li+) represents the maximum voltage that carbon-based electrodes can tolerate without significant side reactions (*ibid.*).

The third issue concerns the large hysteresis seen between charge and discharge (up to 2 V), resulting in extremely low energy efficiencies, limiting the use of this battery in practical applications (Mitchell *et al.;* Adams *et a*/*.;* Gallant *et al.* 2013; Freunberger et al. J. Am. Chem. Soc*;* McCloskey et al. J. Phys. Chem. Lett. 2011; Freunberger et al. Angew. Chem. Int. Ed.*;* McCloskey *et a*/*.* 2012; Gallant *et al.* 2012; Ottakam Thotiyl et al. J. Am. Chem. Soc.*;* Leskes *et a*/.).

Finally, the cells are very sensitive to moisture and carbon dioxide (Gowda *et a*/*.;* Lim et al. J. Am. Chem. Soc.*:* Liu *et al.;* Guo *et al.*). During cell operation in air, H₂O and CO₂ can readily react with Li₂O₂ to form the more stable LiOH and Li carbonate phases, which gradually accumulate in the cell, resulting in battery failure. Moisture and CO₂ are also known to have deleterious effects on the Li-metal anode (Girishkumar *et al.;* Bruce *et al.;* Lu, *et al*.).

A number of strategies have been proposed to reduce the voltage hysteresis, involving the use of electrocatalysts (Lu *et al.* 2011; McCloskey et al. J. Am. Chem. Soc. 2011; Hyoung et al. Adv. Energy Mater.*;* Hyoung et al. Nat. Chem.*;* Lu *et a*/*.* 2013; Jung *et a*/*.;* Yilmaz *et al.;* Sun et al. Nano Lett.), porous electrode structures (Xiao et al.; Wang et al.; Lim et al. Adv. Mater.) and redox mediators (Lacey *et a*/*.;* Chen *et al.;* Sun et al. J. Am. Chem. Soc.*;* Lim et al. Angew. Chem. Int. Ed.*;* Kwak *et al*.). Notably, soluble redox mediators, such as tetrathiafuvalene (TTF) (Chen *et al.*) and Lil (Lim et al. Angew. Chem. Int. Ed.*),* have been used to reduce the overpotential of the charge process, the voltage hysteresis being reduced to around 0.5 V. Their operation relies on the electrochemical oxidation of the mediator followed by the chemical decomposition of Li₂O₂ by the oxidized mediator. The charge voltage is thus tuned close to the redox potential of the mediator. For discharge, a redox couple of ethyl viologen has also been used; the role of this soluble mediator is to reduce O₂ in the liquid electrolyte rather than doing that on the solid electrode surface, so as to help prevent rapid blocking of the solid electrode surface by the subsequently formed poorly conducting Li₂O₂ phase (Lacey *et al.*).

Another important concern is the moisture-sensitive chemistry in Li-air cells: during cell operation in air, water may gradually accumulate in the cell, readily transforming Li₂O₂ to more stable LiOH, which kills the battery.

The present inventors have developed a lithium-oxygen battery with an extremely high efficiency, large capacity and a very low overpotential.

### Summary of the Invention

The invention generally provides a method for performing a charging and/or discharging step within a lithium-oxygen battery, the method comprising the steps of (i) generating lithium hydroxide (LiOH) from lithium ion at a working electrode, and/or (ii) generating lithium ions from lithium hydroxide (LiOH) at the working electrode.

Unexpectedly, the inventors have found that a lithium-oxygen battery may operate *via* the reversible formation and removal of LiOH crystals. Thus, contrary to previous reports, LiOH is a useful discharge product in a lithium-oxygen battery. Additionally, LiOH is a useful oxygen source in the charging step of the lithium-oxygen battery.

The methods of the invention are insensitive to the presence of water, which is tolerated in high levels within the electrochemical cell. Indeed, the presence of water allows for the formation of LiOH discharge products in initial and later cycles of the lithium-oxygen battery. The methods of the invention therefore allow a lithium-oxygen battery to be used in real, practical conditions.

The inventors have found that a lithium-oxygen battery making use of lithium hydroxide as a discharge product has a high energy efficiency, excellent cyclability and a relatively low overcharge potential. For example, the inventors have found that such a cell has a voltage gap of 0.2 V, and the cell may be cycle at 1,000 mAh/g for over 2,000 cycles, with no capacity fading. The cell has a calculated efficiency of over 90%. Accordingly, the lithium-oxygen battery of the invention addresses directly a number of critical issues limiting the use of known lithium-oxygen batteries.

In a first aspect of the invention there is provided a method for discharging and/or charging a lithium-oxygen battery, the method comprising:
(i) generating a discharge product on or within a working electrode in a lithium-oxygen battery in a discharging step, wherein the amount of LiOH in the discharge product is greater than the amount of Li₂O₂; and/or
(ii) consuming LiOH on or within a working electrode in a lithium-oxygen battery in a charging step thereby to generate oxygen together with water, wherein the amount of LiOH consumed in the charging step is greater than the amount of Li₂O₂ consumed,
and the lithium-oxygen battery has an electrolyte comprising an organic solvent and an iodine-based redox mediator having an l⁻/l₃⁻ couple, wherein the water content of the electrolyte of a fully charged battery is 3 to 6 wt%.

In one embodiment, LiOH may be the predominant lithium product formed in the discharging step.

The discharge step is associated with the consumption of oxygen. LiOH may be the predominant end product for the oxygen consumed in the discharge step.

The charge step is associated with the generation of oxygen and water. In one embodiment, LiOH may be the predominant oxygen source in the charging step.

In one embodiment, the method comprises step (i) and step (ii) (a charge and discharge cycle). Step (i) may be performed before or after step (ii). Steps (i) and (ii) may be repeated, for example in multiple charge/discharge sequences (multiple cycles of charging and discharging). The present inventors have found that such a system is associated with ultrahigh efficiency, large capacity and superior cycling ability.

The charge step is performed in the presence of an iodine-based mediator having an l⁻/l₃⁻ couple. Here, l⁻/l₃⁻ may be reversibly cycled in the battery.

As disclosed herein there is provided the use of lithium hydroxide as a discharge product in the oxygen reduction reaction in a lithium-oxygen battery.

As disclosed herein there is provided the use of lithium hydroxide as a reagent in the oxygen evolution reaction in a lithium-oxygen battery.

Additionally, lithium hydroxide may be a reagent for the generation of water in a lithium-oxygen battery.

Thus, the lithium hydroxide may be referred to as the oxygen acceptor and donor in the lithium-oxygen battery, and such is used in preference to lithium peroxide and/or lithium oxide in the known lithium-oxygen batteries.

Disclosed herein is a discharged lithium-oxygen battery having a working electrode comprising a lithium discharge product, wherein the amount of LiOH in the lithium discharge product is greater than the amount of Li₂O₂.

The discharged lithium-oxygen battery may be a partially or fully discharged lithium-oxygen battery. Thus, the battery mat be discharged to its intended discharge limit, or to a discharge value below that discharge limit.

The discharge product may be substantially free of Li₂O₂. LiOH may be the predominant discharge product.

In another aspect there is provided a fully charged lithium-oxygen battery having an electrolyte comprising an organic solvent and an iodine-based redox mediator having an l⁻/l₃⁻ couple, wherein the water content of the electrolyte is 3 to 6 wt%.

These and other aspects and embodiments of the invention are described in further detail below.

### Summary of the Figures

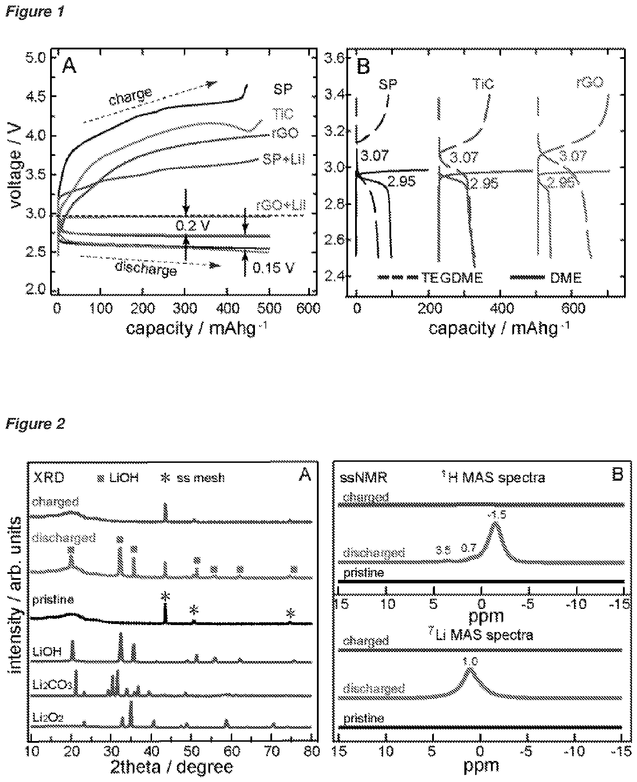

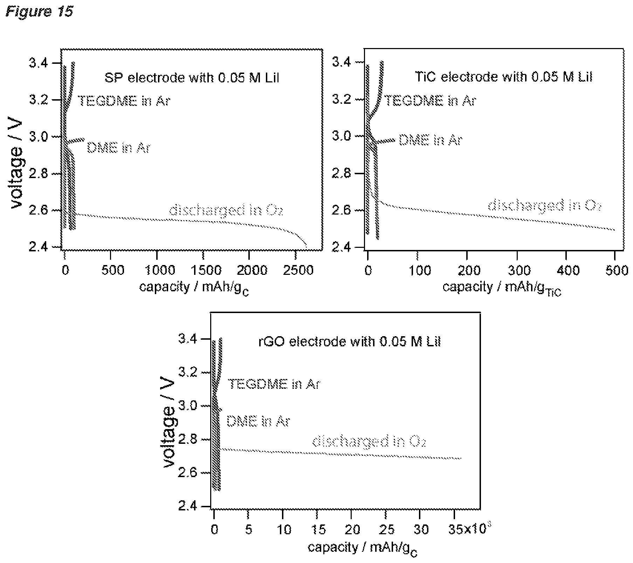

Figure 1 (a) shows the discharge-charge curves for Li-O₂ cells using mesoporous SP and TiC, and macroporous rGO electrodes, with capacities limited to 500 mAh/g (based on the mass of carbon or TiC); a 0.25 M LiTFSI/DME electrolyte was used for all the cells. For SP and rGO electrodes, 0.05 M Lil was added to the LiTFSI/DME electrolyte in a second set of electrodes (purple and red curves). All cells in (A) were cycled at 0.02 mA/cm². The horizontal dashed line represents the position (2.96 V) of the thermodynamic voltage of a Li-O₂ cell. Figure 1 (b) shows the galvanostatic charge-discharge curves of cells containing 0.05 M Lil and 0.25 M LiTFSI, cycled under an Ar atmosphere with different electrode/electrolyte solvent combinations. All cells in (b) were cycled at 0.2 mA/cm². The crossing point (numbered in the figure) of the charge-discharge curves indicates the positions of the redox potential of l⁻/l₃⁻ in a specific electrode-electrolyte system. The capacities of TiC and rGO cells in Figure 1 (b) have been scaled by a factor of 5 and 0.2, respectively, to more clearly illustrate the corresponding redox potentials of Lil; a direct comparison of capacities between Lil in Ar and Li-O₂ cells is given in Figure 15. The discharge-charge curves show the change in voltage (V) with change in capacity (mAh/gcarbon).
Figure 2 shows the XRD patterns (a) and ¹H and ⁷Li ssNMR spectra (b) comparing a pristine rGO electrode to electrodes at the end of discharge and charge in a 0.05 M Lil/0.25 M LiTFSI/DME electrolyte. The spectra are scaled according to the mass of the pristine electrode and number of scans. Asterisks in Figure 2 (a) represent diffraction peaks from a stainless steel mesh. Of note, ¹H resonances of proton-containing functional groups in the pristine rGO electrode are not visible in the ¹H ssNMR spectrum in Figure 2 (b) since they are very weak in comparison to the LiOH signal. The weaker signals in the ¹H NMR spectra at 3.5 and 0.7 ppm are due to DME and grease/background impurity signals, respectively. The XRD spectra show change in intensity (arbitrary units) with change in 2theta (degrees); the NMR spectra show change in intensity (arbitrary units) with change checmial shift (ppm).

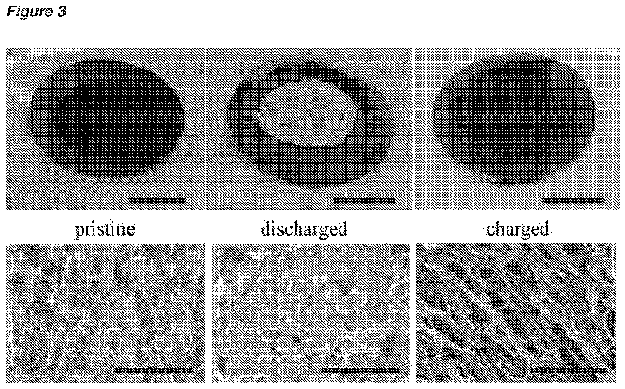

Figure 3 shows optical and SEM images of pristine, fully discharged and charged rGO electrodes obtained with a 0.05 M Lil/0.25 M LiTFSI/DME electrolyte in the first cycle. The scale bars in optical images are all 5 mm, and those in SEM images are all 20 µm.

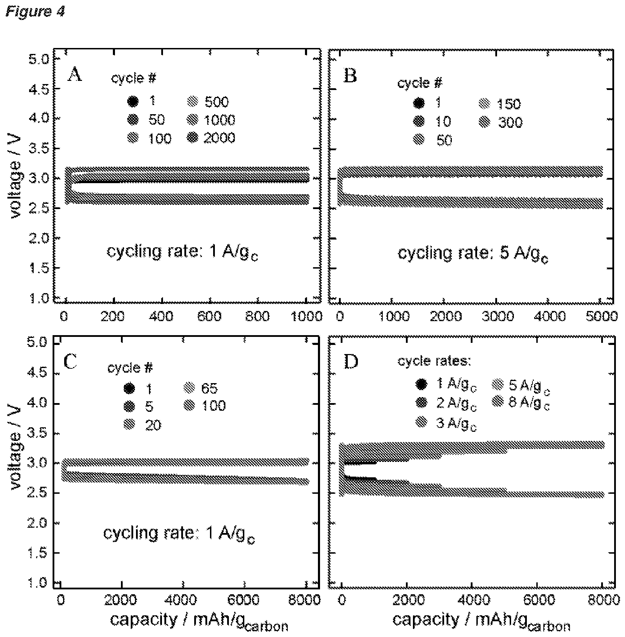

Figure 4 shows discharge-charge curves for Li-O₂ batteries using rGO electrodes and 0.05 M Lil/0.25 M LiTFSI/DME electrolyte with capacity limits of 1,000 mAh/g_{c} (a), 5,000 mAh/g_{c} (b), and 8,000 mAh/g. (c), and cycled at different rates (D); 3 cycles were performed for each rate in (d). The cell cycle rate is based on the mass of rGO, e.g., 5 A/g_{c} is equivalent to 0.1 mA/cm². The discharge-charge curves show the change in voltage (V) with change in capacity (mAh/g_{carbor}).

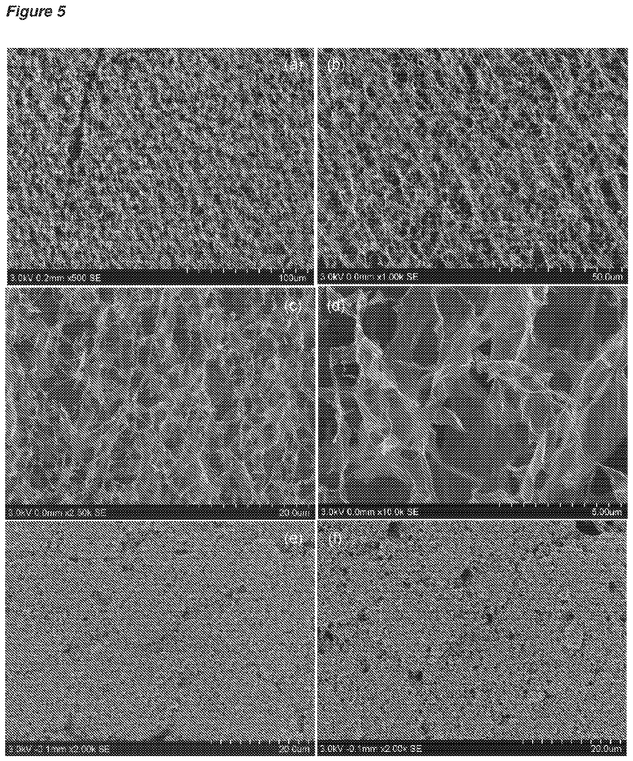

Figure 5 is a series of SEM images for (a) to (d) a hierarchically macroporous rGO electrode at various magnifications, (e) a mesoporous Super P (SP) carbon electrode; and (f) a mesoporous TiC electrode. In images (a), (b) and (d) the scale shown is 100 µm 50 µm and 5 µm respectively. In images (c), (e) and (f) the scale shown in 20 µm.

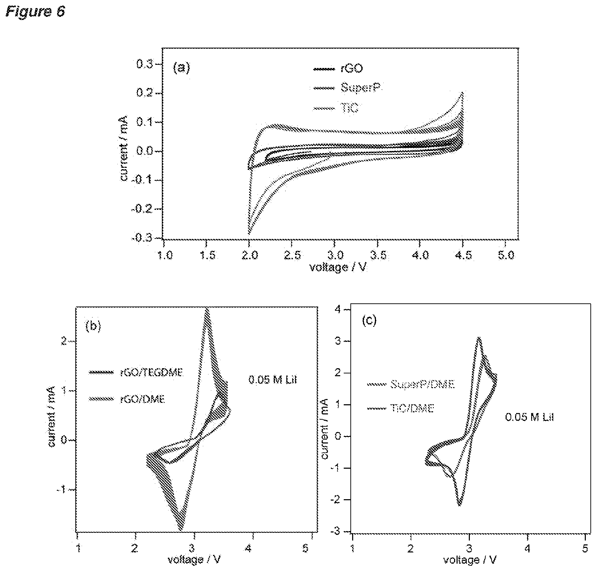

Figure 6 shows (a) cyclic voltammograms of cells using rGO, Super P (SP) and TiC electrodes in 0.25 M LiTFSI/DME under an Ar atmosphere; (b) cyclic voltammograms comparing cells using rGO electrodes in 0.05 M Lil/0.25 M LiTFSI/DME and TEGDME electrolytes under an Ar atmosphere; and (c) cyclic voltammograms of cells using SP and TiC electrodes in 0.05 M Lil/0.25 M LiTFSI/DME under an Ar atmosphere. The sweeping rate for all cells was 5 mV/s. The cyclic voltammograms show change in current (mA) with change in voltage (V).

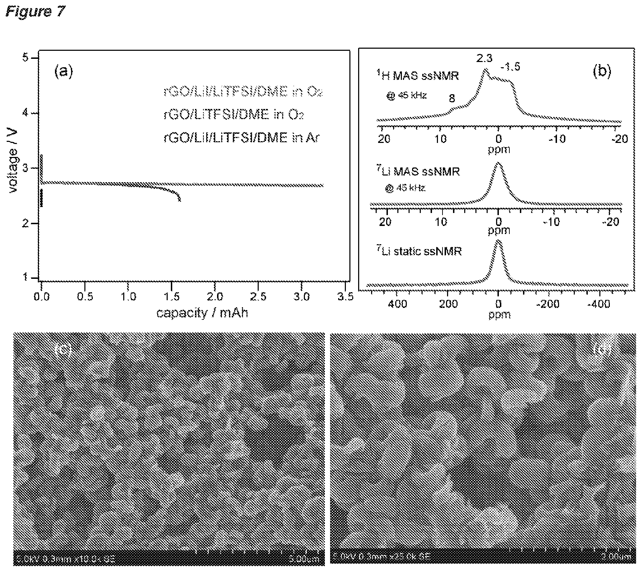

Figure 7 shows (a) the electrochemistry of a Li-O₂ battery using a rGO electrode in a 0.25 M LiTFSI/DME electrolyte (blue curve) and characterization of this discharged rGO electrode by ssNMR (b) and SEM (c) and (d). The discharge-charge curve shows the change in voltage (V) with change in capacity (mAh). The NMR spectra show change in intensity (arbitrary units) with change chemical shift (ppm). The scale bars in Figures 7 (c) and (d) are 5.0 µm and 2.0 µm respectively.

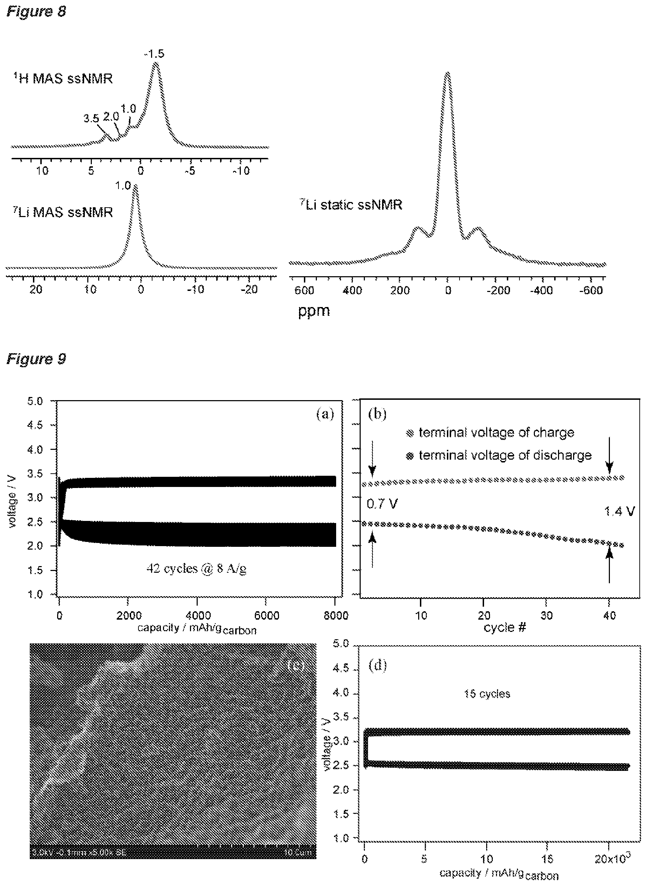

Figure 8 shows ssNMR spectra of an rGO electrode used in a Li-O₂ cell discharged with 0.05 M Lil/0.25 M LiTFSI/DME electrolyte inside an Ar glovebox (< 0.1 ppm H₂O). The dominant resonances at -1.5 ppm in ¹H and 1.0 ppm in ⁷Li MAS spectra respectively, and the characteristic line shape of the ⁷Li static spectrum all suggest that LiOH is the prevailing discharge product of this cell. The other resonances labelled in the ¹H spectrum are attributed residual DME in the electrode. The NMR spectra show change in intensity (arbitrary units) with change chemical shift (ppm).
Figure 9 shows (a) the discharge-charge curves of a Li-O₂ battery cycled at 8 A/g_{c} rate using an rGO electrode in 0.05 M Lil/0.25 M LiTFSI/DME electrolyte and (b) the corresponding terminal voltages as a functional of cycle numbers. Figure 9 (c) is an SEM image of the rGO electrode from the Li-O₂ cell in (a) after 42 cycles. Figure 9 (d) represents a Li-O₂ cell that was cycled for 1,000 cycles with a capacity limited to 1,000 mAh/g_{c} and then deliberately subjected to much deeper discharge-charge cycles (15 cycles) with a reversible capacity of 22,000 mAh/g_{c} at 1 A/g_{c} rate. Apart from the larger voltage polarization due to many prior cycles, the cell still demonstrates a good reversibility. The discharge-charge curves show the change in voltage (V) with change in capacity (mAh/g_{carbon}). The change in voltage (v) is also shown with change in cycle number. The scale bars in the SEM image is 10.0 µm.

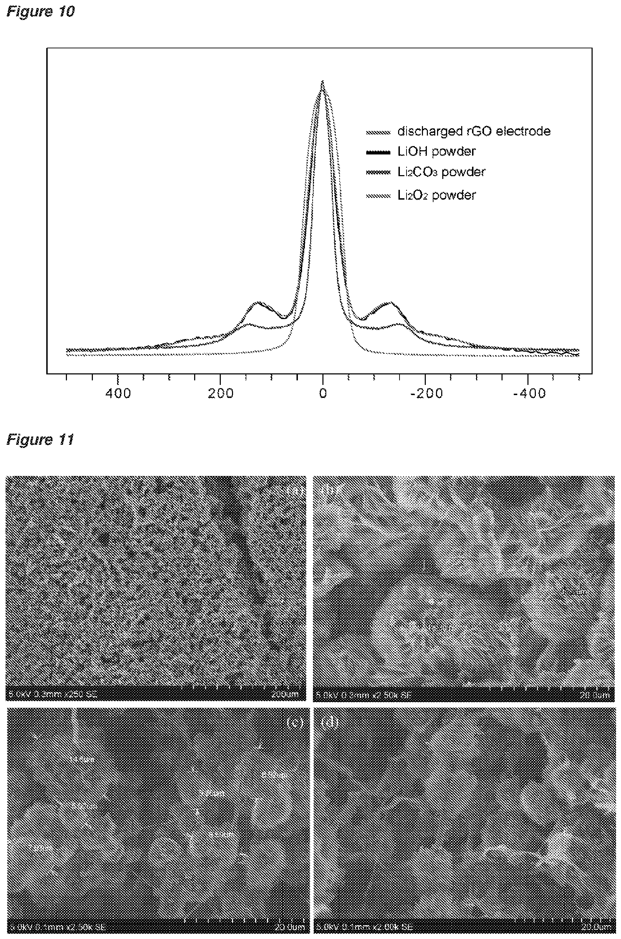

Figure 10 shows a comparison between the ⁷Li static NMR spectra, acquired at 11.7 T, of a discharged rGO electrode from a Li-O₂ cell using 0.05 M Lil/0.25 M LiTFSI/DME electrolyte and those of the model compounds of LiOH, U₂CO₃ and Li₂O₂. The NMR spectra show change in intensity (arbitrary units) with change chemical shift (ppm).
Figures 11 (a) to (c) are a series of SEM images of a fully discharged rGO electrode in 0.05 M Lil/0.25 M LiTFSI/DME electrolyte. Figure 11 (a) shows the outer surface, whilst figures 11 (b) to (c) show the interior apace. Figure 11 (d) is an SEM image of the glass fibre separator. The scale bar in Figure 11 (a) is 200.0 µm. The scale bars in Figure 11 (b) to (d) are 20.0 µm.

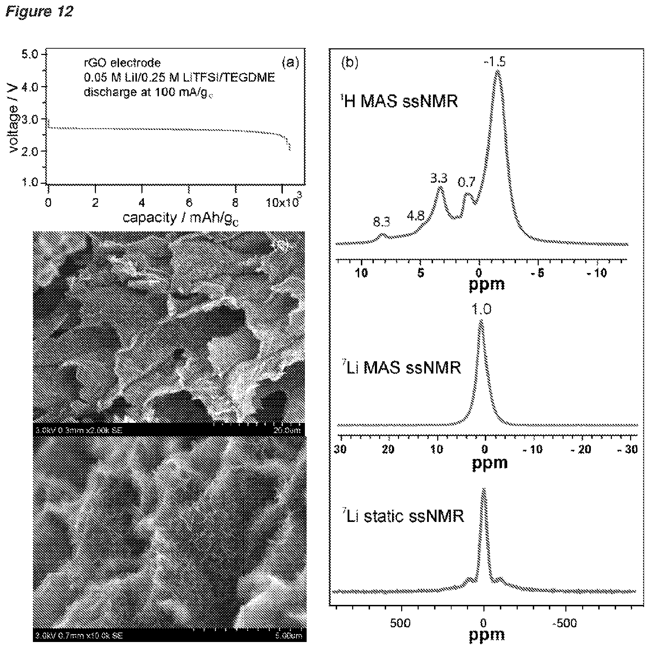

Figure 12 shows (a) the electrochemistry of a Li-O₂ battery using an rGO electrode in a 0.05 M Lil/0.25 M LiTFSI/TEGDME electrolyte; (b) the characterization of the discharged rGO electrode by ssNMR; and (c) the characterization of the discharged rGO electrode by SEM. The discharge-charge curves show the change in voltage (V) with change in capacity (mAh/gcarbon). The NMR spectra show change in intensity (arbitrary units) with change chemical shift (ppm). The scale bars in the SEM images are 20.0 µm (top) and 5.00 µm (bottom).

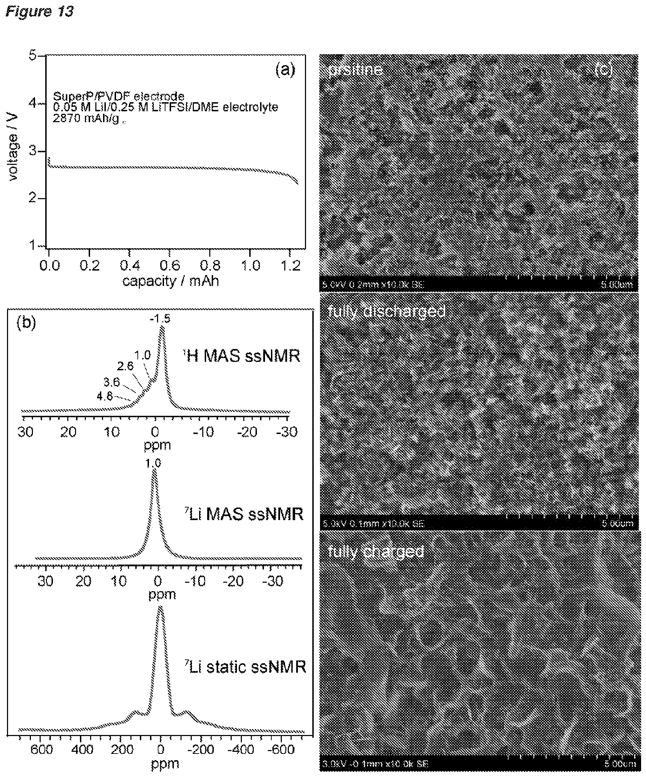

Figure 13 shows (a) the electrochemistry of a Li-O₂ battery using an SP carbon electrode in a 0.05 M Lil/0.25 M LiTFSI/DME electrolyte; (b) characterization of the discharged SP electrode by ssNMR, acquired at 11.7 T; and (c) characterization of the discharged SP electrode by SEM, where the images shows a pristine electrode (top), a fully discharged electrode (middle) and a fully charge electrode (bottom). The discharge-charge curves show the change in voltage (V) with change in capacity (mAh/gcarbon). The NMR spectra show change in intensity (arbitrary units) with change chemical shift (ppm). The scale bars in the SEM images are 5.00 µm.

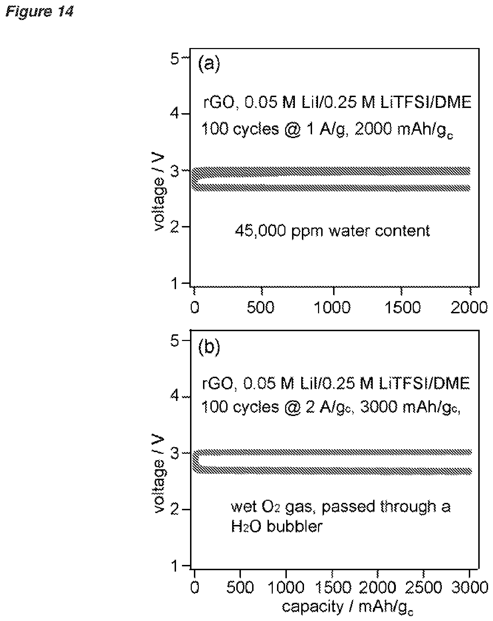

Figure 14 shows the discharge-charge profiles of Li-O₂ batteries cycled using rGO electrodes in a 0.05 M Lil/0.25 M LiTFSI/DME electrolyte where Figure 14 (a) shows the profile for a cell with 45,000 ppm added water in the electrolyte; and Figure 14 (b) shows the profile for a cell purged with O₂ gas that had been passed through a water bubbler (wet O₂). The discharge-charge curves show the change in voltage (V) with change in capacity (mAh/gcarbon).
Figure 15 shows galvanostatic charge-discharge curves of cells cycled with 0.05 M Lil in 0.25 M LiTFSI/TEGDME and DME electrolytes, in an Ar atmosphere, where the electrodes are SP (top left); TiC (top right) and rGO (bottom). Each cell was first charged and then discharged. The grey line in each graph shows the corresponding electrodes discharged in the same DME-based electrolyte in an O₂ atmosphere. The discharge-charge curves show the change in voltage (V) with change in capacity (mAh/gcarbon).

### Detailed Description of the Invention

The present inventors have identified lithium hydroxide (LiOH) as a useful redox active species in a lithium-oxygen battery (lithium-air battery). Lithium hydroxide may be used as an alternative discharge product to lithium peroxide (Li₂O₂), which is currently the standard redox active species within a lithium-oxygen battery.

The formation of lithium hydroxide during the oxygen reduction step in a lithium-air battery is well studied. The formation of lithium hydroxide is regarded as problematic, and this product is regarded as an unwanted by-product in the electrochemical reaction for generating Li₂O₂. Until now many researchers have looked to minimise or prevent lithium hydroxide formation with a view to increasing the amount of Li₂O₂ formed during the discharge reaction.

For example, Kwak *et al.* study the formation of lithium hydroxide in a lithium-oxygen cell containing a redox mediator (Lil). Here the authors explain that the formation of lithium hydroxide, together with the desired lithium peroxide (Li₂O₂), reduces the capacity of the battery, and this is said to be a major drawback for the system under consideration. The authors associate the (undesirable) formation of lithium hydroxide with the presence of an electrochemical mediator, and the amount of mediator is reduced in order to minimise lithium hydroxide formation.

Lim *et al.* also describe lithium-oxygen batteries using a Lil mediator. The authors also point to the undesirable formation of lithium hydroxide in a competing side-reaction during the cycling of the electrochemical cell (during normal formation and depletion of Li₂O₂). The system developed by the authors is said to depress side-reactions, as the working voltages for the cell are below the voltages that are associated with by-product formation.

The voltage values discussed below are made with reference to Li/Li⁺, as is common in the art.

US 2012/0028164 describes a lithium-oxygen battery. A lithium ion conductive solid electrolyte membrane is formed on a surface of the negative electrode. This serves as a protective layer preventing water contained in an aqueous electrolyte from directly reacting with lithium contained in the negative electrode. Here, LiOH is formed during a discharging step. The LiOH is dissolved in the aqueous electrolyte.

Similarly, US 2007/029234 describes a lithium-oxygen battery where an aqueous electrolyte is separated from the lithium anode by a water impervious ionic membrane. LiOH is generated during the discharge reaction and this is highly soluble in the aqueous electrolyte.

CN 102127763 also describes a lithium-oxygen battery having an aqueous electrolyte. This electrolyte is also separated from the lithium anode by an inorganic film, which permits passage of lithium ions only. The lithium anode is itself provided in a chamber holding a hydrophobic ionic liquid. The cathode is placed in a water-based electrolyte. LiOH is generated during the discharge reaction and this is highly soluble in the water-based electrolyte.

WO 2016/036175, which was published after the priority date of the present case, describes a lithium-oxygen battery using the non-aqueous electrolyte tetraglyme. LiOH is said to be generated as a discharge product *via* a complex series of reactions involving the formation of Li₂O₂ as an intermediate species which reacts with the tetraglyme.

I. Landa-Medrano et al. (Electrochem. commun., 2015, 59, 24-27) monitors by means of UV-visible spectroscopy the formation nand consumption of triiodie ione (l₃⁻), generated when iodine (l⁻⁻) is used as a redox mediator in a lithium-oxygen battery using the non-aqueous electrolyte tetraglyme.

### Methods of the Invention

The present case provides a method for charging and/or discharging a lithium-oxygen electrochemical cell. The method is based on the formation and/or degradation of lithium hydroxide within the cell, and particularly the formation and/or degradation of lithium hydroxide on and/or within the working electrode of the cell.

In a first aspect of the invention there is provided a method for discharging and/or charging a lithium-oxygen battery, the method comprising:
(i) generating a discharge product on or within a working electrode in a lithium-oxygen battery in a discharging step, wherein the amount of LiOH in the discharge product is greater than the amount of Ll₂O₂; and/or
(ii) consuming LiOH on or within a working electrode in a lithium-oxygen battery in a charging step, thereby to generate oxygen together with water, wherein the amount of LiOH consumed in the charging step is greater than the amount of Li₂O₂ consumed,
and the lithium-oxygen battery has an electrolyte composing an organic solvent and an iodine-based redox mediator having an l⁻/l₃-couple, wherein the water content of the electrolyte of a fully charged cell is 3 to 6 wt%.

Typically lithium hydroxide is the predominant product of the oxygen reduction reaction (the discharge step). Thus, the mole amount of lithium hydroxide formed in the discharge reaction may be greater than the mole amount of lithium peroxide formed.

The discharge product may refer to the product formed on the working electrode only. The consumption of LiOH may refer to the consumption of the discharge product on the working electrode only.
In one embodiment, the amount of lithium hydroxide formed in the discharge reaction is at least 30%, at least 40%, at least 50%, at least 60%, at least 70%, at least 80%, at least 90% or at least 95% of the total mole amount of lithium hydroxide and lithium peroxide formed in the discharge reaction, such as by reference . In a further embodiment, the total amount may refer to the total amount of all lithium products formed in the discharge reaction, or it may refer to the total amount of lithium hydroxide, lithium peroxide and lithium oxide formed in the discharge reaction.
In one embodiment, substantially all of the lithium product formed in the discharge reaction is lithium hydroxide.
In one embodiment, the discharge product is substantially free of Li₂O₂. Further, the discharge product after the first discharge step is substantially free of Li₂O₂.

In step (ii) the consumption of LiOH is associated with the generation of oxygen together with water. The evolution of oxygen in this step may be established by mass spectrometry.

It follows that lithium hydroxide is the predominant source of oxygen in the oxygen evolution reaction. The lithium hydroxide may also be a source of water in the oxygen evolution reaction.
Thus, the mole amount of lithium hydroxide consumed in the evolution reaction may be greater than the mole amount of lithium peroxide consumed.
In one embodiment, the relative amount of lithium hydroxide consumed in the oxygen evolution reaction is at least 30%, at least 40%, at least 50%, at least 60%, at least 70%, at least 80%, at least 90% or at least 95% of the total mole amount of lithium hydroxide and lithium peroxide consumed in the oxygen evolution reaction. In a further embodiment, the total amount may refer to the total amount of all lithium products consumed in the oxygen evolution reaction, or it may refer to the total amount of lithium hydroxide, lithium peroxide and lithium oxide consumed in the oxygen evolution reaction.
In one embodiment, substantially all of the lithium product consumed in the oxygen evolution reaction is lithium hydroxide.

The amount of lithium hydroxide formed in a discharging step may be determined by standard analytical means. For example the present inventors have used solid state ⁷Li and ¹H NMR techniques to determine the lithium products present within a carbon electrode. The relative amount of LiOH in comparison with Li₂O₂ may be determined from the integrals of the relevant peaks in the ¹⁷O NMR spectrum. Here, the ¹⁷O resonances due to different discharge products are characteristic in the spectrum (see, for example, Leskes *et al*.). NMR techniques may be used to measure both the formation and the decomposition of LiOH in the discharge and charging steps.

⁷Li NMR measurement generally gives qualitative information, as the possible discharge products (LiOH, Li₂CO₃, Li₂O₂) have very similar ⁷Li resonances. However, their respective static NMR spectrum have distinct line shapes (see Figure 10, for example), and in the present case the static NMR spectrum of a discharged product clearly indicates that LiOH is the dominant discharge product.

The presence of LiOH may also be determined by XRD of electrode materials after discharge. In the cells for use in the present invention, no Li₂O₂ is visible in the XRD spectrum of a discharged electrode. FTIR analysis may also be used to identify Li₂O₂ and LiCO₃ products within the electrode.

The formation of a LiOH product may also be observed visually, with the appearance of extensive white product across and within the working electrode. This effect is particularly pronounced when the working electrode is a characteristically black carbon electrode. See, for example, the images in Figure 3, which shows the change in colour after the discharging and charging of a pristine carbon working electrode (in this case a rGO electrode).

The formation of lithium hydroxide in the lithium oxygen-battery may result from a series of interrelated reactions. The lithium hydroxide is not necessarily the direct product of a reaction between lithium ion and oxygen.

In the methods of the invention, an iodide mediator (l₃⁻/l⁻) is used to reversibly cycle the lithium oxygen-battery. On charge, LiOH is removed and the inventors believe that this occurs *via* a reaction of the LiOH with l₃⁻, with lithium ion and l⁻ generated together with O₂.

The chemistry of the discharge step may be complicated for the reason that l₃⁻ can also react to form metastable lO⁻, which then disproportionates forming lO₃⁻ and l⁻, together with lithium ion. The relatively low concentration of water present in the electrolytes for use in the present lithium oxygen-battery drives the reactions to the formation of the lithium ion product. The inventors have found that the reaction of LiOH with l₃⁻ to form lithium ion and l⁻ dominates under aqueous conditions. The rate of the reaction slows down noticeably, but still occurs in solvents, such as DME, containing 3 to 6 wt % water.

The work in the present case shows that repeated cycling of the lithium oxygen-battery provides a LiOH product in each discharge step, and certainly beyond the first charge/discharge cycle.

The method of the invention may comprise steps (i) and (ii). The combination of these steps may be referred to as a cycle (such as a charge and discharge cycle). Steps (i) and (ii) may be repeated a plurality of times. The discharge and charge cycle may be repeated once or more, 2 times or more. Thus, in one embodiment, the method comprises 2 cycles or more, 5 cycles or more, 10 cycles or more, 50 cycles or more, 100 cycles or more, 500 cycles or more, 1,000 cycles or more, or 2,000 cycles or more. The inventors have found that the cell for use in the method of the invention may be cycle many times without capacity fade.

In one embodiment, step (i) is performed before step (ii).

In one embodiment step (i) or step (ii) is performed on a pristine cell. A pristine cell is a cell that has not previously been subjected to a charging or discharging step.

The LiOH-forming reaction also involves the use of an iodide-based mediator. The work in the present case makes use of an l⁻/l₃⁻ couple.

When an iodide mediator is present during the charge step, a LiOH decomposition *l* dissolution reaction is observed at around 3 V, which is a clear distinction of the present work from the decomposition / dissolution reactions reported by others (see Lim *et al.;* Kwak *et al.).* Given that this charge voltage overlaps with that for l⁻/l₃⁻ itself, the first step must involve the direct electrochemical oxidation of l⁻ to l₃⁻. The l₃⁻ species then oxidizes LiOH to form O₂ and H₂O. Given that the battery continues to cycle, despite the large quantity of water that is produced in this reaction, water clearly must not have a deleterious effect on the battery performance.

Thus, the method of the reaction includes the step of forming lithium hydroxide using a lithium ion, oxygen and a hydrogen source. The formation of the lithium hydroxide may occur at the surface of an electrode and/or within the pores of a porous electrode. In the methods of the present case the source of hydrogen for LiOH may be water within the electrolyte. Preferably, the dominant source of hydrogen for LiOH is not the electrolyte solvent.

The electrodes for use in the method are described in further detail below.

The method of the invention relates to the formation of a lithium hydroxide product during a discharge step. The inventors have established that this formation is reversible within the cell. The lithium hydroxide is formed as a product, such as a crystalline product, having a relatively large size. Broadly, the lithium hydroxide may be formed as particles, and these may form larger agglomerations.

LiOH is formed as an insoluble product during the discharge step, and its formation is located to the working electrode. The LiOH products may be present on the outer surface of the electrode and/or within the pores of a porous electrode. The capacity of the electrochemical cell is therefore large, as extensive lithium hydroxide formation is permitted across and throughout the working electrode.

In one embodiment, the discharge step forms LiOH products, such as agglomerations, on the surface of the working electrode, where the LiOH products have an average largest dimension of at least 0. 1 µm, at least 1 µm, at least 10 µm, or at least 25 µm.

In one embodiment, the discharge step forms LiOH products, such as a particles, within the pores of a porous working electrode. The LiOH products may have an average largest dimension of at 1 µm, at least 5 µm at least 10 µm or at least 15 µm. In corresponding systems where Li₂O₂ is the discharge product, the inventors have found that the product has an average largest dimension of less than 1 µm.

The inventors believe that the use of redox mediator allows the formation of LiOH as the predominant product in the discharge step, and also allows the formation of enlarged product material, such as agglomerations and large particles.

The size of the LiOH particles may be determined from the SEM images of the electrode after a discharge step.
The formation of a LiOH product may also be observed by eye, with the appearance of an extensive white product across the electrode. This is particularly noticeable when the working electrode is black (such as when a carbon-based electrode is used).

The SEM images of a charged electrochemical cell also show that the amount of LiOH remaining on and within the working electrode is minimal: only at higher magnifications is it possible to observe unconsumed (residual) LiOH on the surface of the electrode. The amount of residual LiOH is observed to increase with cycle number. However, this residual LiOH may be removed by a deliberate over-charging during one or more charging steps, In this way the loss of capacitance may be minimised over a large number of charge and discharge cycles.

### Lithium-Oxygen Battery

A lithium-oxygen battery may generally refer to an electrochemical cell for generating electricity by the reaction of a lithium species within the cell. Typically, the cell has a working electrode for lithium chemistry and a counter electrode. A lithium electrolyte, such as a non-aqueous electrolyte, is provided in the interelectrode space. The head space of the electrochemical cell has an oxygen-containing atmosphere. A reference electrode may also be present. The electrochemical cell may also be referred to as a lithium-oxygen or lithium-air battery.

A separator may be provided in the cell between the working and counter electrodes. The separator may be permeable to lithium ions, and other ions. The separator may be a glass fibre separator (for example as described by Jung *et al.* and Xiao *et al.*). Typically a porous separator, such as Celgard, is used. A ceramic membrane may also be used.

Typically the separator does little to prevent oxygen reduction at the counter electrode (the negative electrode). Usually oxygen reduction is prevented by the formation of a passivating layer on the Li metal counter electrode caledl the solid electrolyte interphase (or SEI). This layer also seems to minimise or prevent reduction/oxidation of the mediator.

The working electrode is the cathode during the discharge step, where oxygen reacts with a lithium species in the electrolyte to ultimately generate LiOH.
The counter electrode is the anode during the discharge step.

The working electrode may be in electrical connection with the counter electrode.

The choice of electrolyte solvent is discussed in further detail below.

In the present invention, the lithium-oxygen battery is suitable for the formation of LiOH, either in addition to, or as an alternative to, Li₂O₂. As described herein, LiOH is the predominant product of the discharge reaction, and may be formed to the substantial exclusion of Li₂O₂.

Charging refers to the step of converting lithium hydroxide to lithium ion and oxygen. The charging step is the electrochemical oxidation of lithium hydroxide.

It is noted that the term "air battery" is used in the art even though it is atypical to operate the battery in an ambient air atmosphere. Typically prior art experiments use the lithium-air battery in an oxygen atmosphere, which is anhydrous, and is typically also at pressures greater than ambient pressure. For this reason, some researchers refer more accurately to the use of lithium-oxygen batteries (e.g. see Kwak *et al.*) rather than lithium-air batteries.

For example, Xiao *et al.* describe the operation of a lithium-oxygen battery under an oxygen atmosphere at 2 atmospheres (202.5 kPa). Chen *et al.* describe the operation of a lithium-oxygen battery under an oxygen atmosphere at 1 atmosphere (101.3 kPa).

Thus, whilst the aim of research to date is to develop a system for use in in air, currently exemplified systems are generally sensitive to water, or are more generally sensitive to conditions that promote the formation of lithium hydroxide at the electrode. The use of a high purity oxygen atmosphere is also intended to limit the presence of carbon dioxide within the electrochemical cell. The presence of carbon dioxide may complicate the electrochemical reactions within the cell, and may give rise to undesirable by-products.

It should be noted that the use of a closed oxygen system is not necessarily a disadvantage, as some uses of a lithium-oxygen battery may accommodate a closed system. However, for general applicability it is highly desirable to have a lithium-oxygen battery that is tolerant of water.

In one embodiment, the electrochemical cell is provided within a substantially pure oxygen atmosphere. The atmosphere may be substantially anhydrous. The atmosphere may be substantially free of carbon dioxide. The electrochemical cell may be contained within a sealed system, and the atmosphere may refer to the head pace of the electrochemical cell.

In one embodiment, the atmosphere has a water content of 100 ppm or less, such as 50 ppm or less, such as 10 ppm or less.
In one embodiment, the atmosphere has a carbon dioxide content of 200 ppm or less, such as 100 ppm or less, such as 50 ppm or less, such as 10 ppm or less.

Methods for the preparation of an atmosphere, such as a substantially anhydrous and a substantially carbon dioxide-free oxygen atmosphere are well known in the art. Oxygen of this type is also available from commercial sources.

As explained in further detail below, the electrochemical cell is tolerant of water. Thus, the atmosphere may have a water content of 10 ppm or more, 50 ppm or more, 100 ppm or more, 500 ppm or more or 1,000 ppm or more.
The water content may refer to the water content in atmosphere of a pristine cell, or in the atmosphere of a cell that has been cycled a plurality of times, for example such as 2 or more, 10 or more, 5 or more, or 100 or more.

The atmosphere may be provided at a pressure equivalent to standard atmospheric pressure, such as 101.3 kPa. Alternatively the atmosphere may be provided at pressures greater than this. For example, the atmosphere may be provided at a pressure of at least 1.5 atmospheres (at least 152.0 kPa), at least 2 atmospheres (at least 202.5 kPa) or at least 5 atmospheres (at least 506.6 kPa).

The electrochemical cell may be adapted for use at pressures above standard atmospheric pressure.

The electrochemical cell may be maintained at ambient temperature, such as 25°C.

A partially discharged lithium-oxygen battery refers to an electrochemical cell where there is at least some LiOH product formed on the working electrode. The lithium-oxygen battery may be regarded as fully discharged when the discharge voltage from the system drops below a practicable level. For example, where the discharge voltage drops below 2.0 V, such as below 1.7 V, such as below 1.5 V. The drop in discharge voltage occurs when the pores of the working electrode are clogged with the discharge product, or there is generally no electrode surface available to provide electrons (for example, because the electrode surface is covered with a thick insulating product).
Alternatively or additionally, the lithium-oxygen battery may be regarded as fully discharged when the oxygen within the cell is entirely consumed (for example, in a closed system). Alternatively or additionally, the lithium-oxygen battery may be regarded as fully discharged when the lithium in the counter electrode is entirely consumed.

A partially charged lithium-oxygen battery refers to an electrochemical cell where at least part of the LiOH present on or in the working electrode is converted to lithium ions. The lithium-oxygen battery may be regarded as fully charged when the oxygen evolution drops below an appreciable level.
Alternatively or additionally, the lithium-oxygen battery may be regarded as fully charged when the charge voltage rises above a practicable level. For example, where the charge voltage rises above 3,5 V, such as above 4.0 V, such as above 4.5 V. Typically, the charge voltage is limited to 3.5 V or less to prevent decomposition of the carbon electrode.

The battery may be regarded as fully charged when the capacity reaches a desired level. The battery may be regarded as partially charged if the capacity has not yet reached that level. Typical capacity limits are discussed in further detail below.

The cell use in the present invention has substantially no capacity fade, and minimal changes in voltage polarization over multiple discharge and charge cycles, and at high specific capacities.

In one embodiment, the cell is used at a minimum capacity of at least 1,000, at least 2,000, at least 5,000 or at least 10,000 mAh/g. It is desirable to have a capacity of at least 1,000 mAh/g as this a useful capacity for the practical use of the cell.
In one embodiment, the cell is used at a maximum capacity of at most 15,000, at most 20,000, at most 25,000, or at most 40,000 mAh/g. It is desirable to have a capacity of at most 40,000 mAh/g, such as at most 25,000 mAh/g, as this allows the cell to be charged at practicable cycling rates to reach the maximum capacity, and without rapid polarization of the cell voltage.
The inventors have established the cells may be used at capacities of greater than 20,000 mAh/g. See, for example Figure 9, which shows the cycling of a cell at a high cycle rate at a capacity of 22,000 mAh/g. At higher cycling rates the cell voltage polarizes rapidly, probably due to more side reactions at the more reducing (discharge) and oxidising (charge) electrochemical potential, and incomplete removal of discharge product.
In one embodiment, the cell is used at a capacity in a range selected from any of the maximum and minimum values given above. For example, the cell is used at a capacity in the range 2,000 to 40,000 mAh/g, such as from 2,000 to 15,000 mAh/g.

In one embodiment, the cell has a specific energy of at least 500, at least 1,000, at least 2,000, at least 5,000 Wh/kg.
The specific energy of the cell may be derived from the weight increase of the electrode after a discharge. The inventors have found that the weight of a rGO electrode (0.1 mg; 200 µm thick) increases significantly during the discharge (to around 1.5 mg, at a discharge voltage of 2.7 V at a capacity of 32,000 mAh/g, which is 3.2 mAh for the electrode in question).

The specific energy of the electrochemical cell is significantly above the quoted values for known lithium iron phosphate cells. For example, the electrodes for use in the present case are capable of providing 20 times more specific energy compared with the electrodes described by Saw *et al.* (LFP, 18650 discharged at 3.2 V to a capacity of 0.13 mAh with an increase in weight to 1.5 mg). Stevens *et al.* have described a targeted specific energy of 500 Wh/kg for an aqueous lithium-oxygen battery, and the cells for use in the present case have specific energies that are far in excess of this (10 times greater).

The specific energy of the cell may be the energy value determined at a specified capacity, such as a capacity of 1,000, 5,000, 8,000 or 32,000 mAh/g. The specific energy of the cell may be the energy value determined at a specified charge voltage, such as 2.7, 2.8, 2.9, 3.0, 3.1 or 3.2 V.

The inventors have found that the charge capacity of the battery is not significantly reduced over multiple charge and discharge cycles.

Thus, the maximum capacity of the cell, such as described above, is not significantly change over a specified number of charge and discharge cycles.
For example, the maximum capacity of the cell after a specified number of cycles is at least 75%, at least 85%, at least 90%, at least 95% or at least 99% of the maximum capacity of the cell at the earliest charge and discharge cycle.
The specified number of cycles may be 5 cycles, 10 cycles, 50 cycles, 100 cycles, 500 cycles, 1,000 cycles, or 2,000 cycles.
In one embodiment, the first cycle in the specified number of charge and discharge cycles is the first cycle of a pristine cell.
The maximum capacity of the cell may be determined at a specified cycling rate, for example at 1 or 5 A/g.

The cell may be cycled at a rate of at least 0.5, at least 1, at least 2, at least, or at least 4 A/g. It is desirable to have a cycling rate of at least 0.5 A/g, as this allows access to higher cell capacities.

The inventors have found that the cell can tolerate very high cycling rates. However, very high cycling rates are less preferred as the cell voltage polarizes rapidly with each cycle. It has also been noted that the voltage gap between the charge and discharge plateaus increases with increasing cycling rate. For example, when a cell is cycled at 1 A/g the voltage gap is only -0.2 V; at higher rates the gap widens, increasing to 0.7 V at 8 A/g (see Figure 4, for example).

At the higher cycling rates, the cell is polarized at each cycle and after 40 cycles the electrode surface is covered by a large amount of cumulative particles (unlike those of LiOH), which do not seem to be readily removed during charge. It is probable that at these higher overpotentials more substantial parasitic reactions occur, rapidly polarizing the cell by increasing its resistance and impeding the electron transfer across the electrode-electrolyte interface.

Thus in one embodiment, the cycling rate is at most 5, at most 8 or at most 10 A/g. In one embodiment, the cycling rate is at most 1, at most 2, at most 3, at most 4 or at most 5 A/g.

In the methods of the present case the cell may be operated at voltages that do not cause degradation of the working electrode. For example, the cell may be operated at a voltage of less than 3.5 V, which is a stability region for a carbon electrode. As explained in further detail below, the use of a mediator can allow the use of charge voltages that are less, and often significantly less, than 3.5 V.

In a further aspect of the invention there is provided a fully charged lithium-oxygen battery having a high water content. The inventors have found that a lithium-oxygen battery making use of a LiOH discharge product may be used in the presence of water, without loss of performance, such as without loss of capacity.

In the invention, the fully charged lithium-oxygen battery, has a water-containing electrolyte. Such electrolytes are as described below in reference to the electrolyte for use in the lithium-oxygen cell. The electrolyte of the fully charged cell contains 3 to 6 wt% water.

### Electrodes

The electrochemical cell has a working electrode for performing lithium electrochemistry. Within the art, this electrode is referred to as the cathode or the positive electrode within the lithium-oxygen battery.

The working electrode is electrically conductive, and is electrically connectable to the counter electrode, for example within a powerable or powered system.

The capacity of the lithium-oxygen battery is increased where a porous working electrode is used. The ultimate capacity of a lithium-oxygen battery is ultimately determined by the total pore volume that is available within the working electrode to accommodate the discharge products.

Of course, the presence of large pores within the working electrode does not mean that these pores will be fully occupied by a discharge product. The present inventors have found that Li₂O₂ products are formed as small (typically less than 2 µm) particles within the pores of a porous electrode.

In one embodiment, the working electrode is a porous electrode.
In one embodiment, the working electrode is a macroporous electrode.
In one embodiment, the working electrode has a porosity of at least 50 m²/g, at least 60 m²/g, at least 70 m²/g, at least 80 m²/g, at least 90 m²/g, at least 100 m²/g, at least 150 m²/g, at least 200 m²/g, at least 300 m²/g, or at least 400 m²/g.
In one embodiment, the working electrode has a pore volume of at least 0.1 cm³/g, at least 0.2 cm³/g, at least 0.4 cm³/g, at least 0.5 cm³/g, at least 0.7 cm³/g, at least 0.8 cm³/g, at least 0.9 cm³/g, at least 1.0 cm³/g, at least 1.5 cm³/g or at least 2.0 cm³/g.

The porosity and pore volume of the electrode material may be known, or it may be determined using standard analytical techniques, such as N₂ adsorption isotherm analysis.

In one embodiment, the pores of a porous working electrode have an average pore size (largest cross section) of at least 1 nm, at least 5 nm, at least, 10 nm, at least 20 nm, at least 30 nm, at least 40 nm, at least 50 nm or at least 100 nm.
In one embodiment, the porous working electrode possesses macroporous structure. Thus, the electrode may contain pores having pores having a largest cross section of at least 200 nm, at least 500 nm, at least 1 µm, or at least 5 µm.

In the lithium-oxygen battery, insoluble solid products precipitate out of the electrolyte solution during discharge, occupying the available pore volume within the electrode. Macroporous electrodes (as opposed to meso- or microporous electrodes) allow the discharge product to grow continuously up to tens of microns in size. Here there is a continuous supply of reactants, due to the more effective diffusion of Li⁺ and O₂ within the interconnecting conductive macroporous network. In the present case, the use of macroporous electrodes, such as rGO electrodes, is preferred.

In meso- or microporous electrodes, discharge ceases when the smaller pores become clogged, and the diffusion of the electroactive species is no longer possible.

In one embodiment, the working electrode comprises porous carbon, such as graphene, such as porous reduced graphene oxide.

Porous carbon electrodes are generally light and conductive, and can provide large pore volumes, which can provide large capacities.

In one embodiment, the working electrode comprises reduced graphene oxide, Ketjen black or Super P carbon.

The working electrode may have a hierarchical structure. Lim *et al.* have observed that electrodes having a hierarchical structure are less prone to pore clogging by discharge products when compared with other carbon types, such as Ketjen black, which is said to have a closed pore structure.

In one embodiment, the working electrode comprises hierarchical reduced graphene oxide (rGO).

The inventors have found that the use of macroporous working electrode, such as a rGO electrode, is associated with a reduction in the charge voltage compared with SP and TiC. The macroporous electrode, such as the rGO electrode, is also associated with a reduction in the discharge voltage. Accordingly the use of the macroporous electrode is associated with a reduction in the voltage gap between the charge and discharge plateaus. This is seen in Figure 1, when an rGO electrode is used in place of an SP or TiC electrode. This reduction of the discharge overpotential is independent of the use of the mediator. However, it is noted that the use of mediator may bring about a further reduction in the charge potential, thereby further reducing the voltage gap.

The use of hierarchical porous graphene in a lithium-oxygen battery is known in the art. For example, Xiao *et al.* describe the preparation and use of graphene electrodes produced by the thermal expansion and reduction of graphite oxide.

Alternative working electrodes may be used in place of an electrode comprising hierarchical reduced graphene oxide, however these are less preferred. For example, working electrodes based on Ketjenblack (KB) generally have a lower pore volume compared with reduced graphene oxide-based electrodes, and the discharge products in the Ketjenblack systems are generally found to be of smaller size. Xiao *et al.* have observed that the Ketjenblack electrodes have a lower discharge capacity compared with graphene-based electrodes.

A porous electrode may be provided on an electrically conductive substrate. Within the art the substrate is referred to as a current collector. The substrate may be a stainless steel substrate for example, as is commonly used together with graphene-based electrodes. The substrate may be a plate or a mesh.

In one embodiment, the working electrode is substantially free of binders.

in one embodiment the electrode is provided with a mediator on its surface. Suitable mediators are described below in relation to the electrolyte. Jung *et al.* have described the use of electrocatalysts supported on rGO electrodes for use in lithium-oxygen batteries.

The electrochemical cell is provided with a counter electrode. This may also be referred to as a negative electrode.

In one embodiment, the counter electrode is a lithium-containing electrode, which may be a lithium metal electrode (such as described by Lim *et al.,* Kwak *et al.,* Jung *et al.*), a lithium-containing material such as LiFePO₄ (such as described by Chen *et al.*)*,* or another electrode material containing lithium, such as Li₄Ti₅O₁₂ and LiVO₂ electrodes. Such electrodes find common use in the lithium-oxygen batteries known in the art.

A lithium metal electrode may be preferred over a LiFePO₄ electrode as the latter reduces the operational voltage of the battery and has a low specific capacity.

in one embodiment, the working electrode (the positive electrode) may be provided with a lithium source, which may be a salt such as LiOH or Li₂O₂, or a lithiated material such as lithiated Sn or lithiated Si. The lithium source salt may be added to the electrode in a pre-treatment step.

In these embodiments it is not necessary for the counter electrode (the negative electrode) to be a lithium-containing electrode, and alternative materials may be used at the counter electrode. For example Sn- and Si-containing counter electrodes may be used. Alternatively, S-containing, such as S-C composites, may be used.

The counter electrode is not necessarily a conductive material. The electrode may simply be a material that reacts reversibly with Li.

### Electrolyte

The lithium-oxygen battery has an electrolyte. Typically the electrolyte in a charged and discharged cell contains lithium ions. The lithium ions are converted to lithium hydroxide during the discharge of the cell. These lithium ions are replaced by lithium ions from the counter electrode (negative electrode).

The lithium ions are dissolved in the electrolyte.
Typically lithium ions are provided in the form of LiTFSI (bis(trifluoromethane)sulfonimide lithium salt), which is a commonly used salt within lithium-oxygen batteries (see, for example, Lim *et al*.)*.* In another embodiment, lithium ions may be provided in the form of LiPF₆ (*ibid*.) or LiTF (lithium triflate; see Kwak *et al*.)*.*

Lithium ions may be present in the electrolyte at a concentration of at least 0.05 M, at least 0.1 M, at least 0.2 M, or at least 0.25 M.
Lithium ions may be present in the electrolyte at a concentration of at most 0.5 M, at most 1.0 M, or at most 2.0 M.
In one embodiment, the lithium ion is present within the electrolyte at a concentration selected from a range with the upper and lower limits taken from the values given above. For example the mediator is present within the electrolyte at a concentration in the range 0.25 to 2.0 M, such as 0.25 to 0.5 M.
In one embodiment, the lithium ion concentration is about 0.25 M.

In one embodiment, the concentration of lithium ions refers to the total concentration of lithium ions, which may include the lithium ions provided by LiTFSI and the Lil mediator. In one embodiment, the concentration of lithium ions may refer to the concentration of the predominant Li salt, such as LiTFSI, LiPF₆ or LiTF.

The electrolyte for use in the methods of the invention is an electrolyte that is suitable for solubilising lithium ions.

The electrolyte may be a liquid electrolyte, such as a liquid at ambient temperature, for example at 25°C.

The electrolyte may be a non-aqueous electrolyte. As discussed below, it is believed that the water content of the electrolyte increases after during a charge step, when the LiOH discharge product may be converted to oxygen and water.

The electrolyte comprises an organic solvent. Organic solvents for dissolving lithium ions are well known in the art.

In one embodiment, the solvent has an intermediate or high donor number (DN). It has previously been noted in the art that the ability of an electrolyte solvent to solvate the discharge product (as characterized by the donor number) is an important factor governing the reaction mechanism during the discharge (see, for example, Adams *et al*.; Johnson *et al.;* Aetukuri *et al.*). Thus, in those lithium-oxygen cells where Li₂O₂ is the discharge product it has been shown that higher LiO₂ solubility favors a solution precipitation mechanism leading to large toroidal Li₂O₂ crystals and thus higher discharge capacity. In contrast, lower LiO₂ solubility tends to drive a surface mechanism where Li₂O₂ forms a thin film on electrode surface and a lower capacity.

In one embodiment, the donor number is at least 10, at least 12, at least 15, at least 16, or at least 17 Kcal/mol. Where the solvent has a donor number of at least 10 Kcal/mol, solution precipitation of the discharge product will occur, leading to higher capacities in the cell. In one embodiment, the donor number is at most 22, at most 25 or at most 30 Kcal/mol. In one embodiment, the donor number is in a range selected from the upper and lower limits given above. For example the donor number is in the range 15 to 22 Kcal/mol.
The donor number is the enthalpy value for a 1:1 adduct formed between the solvent and the standard Lewis acid SbCl₅ (antimony pentachloride), in dilute solution in the non-coordinating solvent 1,2-dichloroethane.

Solvents having an intermediate donor number, such as in the range 15 to 22 Kcal/mol, such as DME, have been shown to allow simultaneously solution precipitation and surface reduction mechanisms (Johnson *et al.*).

It is believed that a solvent having high solubility for the discharge product favours the formation of that discharge product.

In one embodiment, the solvent is an aprotic solvent.
In one embodiment, the solvent is an organic solvent.

In one embodiment, the solvent is a polyalkylene glycol dialkyl ether solvent, such as a polyethylene glycol dialkyl ether solvent.
In one embodiment, the organic solvent, such as the polyethylene glycol dialkyl ether solvent, is selected from the group consisting of monoglyme (DME), diglyme, triglyme and tetraglyme (TEGDME).
Each of these solvents is known for use in lithium-oxygen batteries.
In one embodiment, the organic solvent is DME. The inventors have found that DME allows the formation of large LiOH particles during the discharge step, whilst the use of a solvent such as TEGDME is associated with the formation of thin films across the electrode surface. Additionally, the inventors have also found that the use of DME is associated with a reduction in the cell overpotential compared with TEGDME.

DME has a donor number of 20 Kcal/mol. TEGDME has a donor number of 16.6 Kcal/mol. See, for example, the supporting information for Gittleson *et al.*

As explained previously, the methods of the invention are tolerant of water, and water is present within the electrolyte in the electrochemical cell. Accordingly, the amount of water in the electrolyte of a fully charged cell is 3 to 6 wt%.

The worked examples show that a lithium-oxygen cell may be cycled without problem when the water content of the electrolyte is around 4.7 wt % (37 mg H₂O per 783 mg of DME, about. 45,000 ppm H₂O). The cell may also be cycled under a humid O₂ atmosphere without problem. In both these cases, no appreciable change in the electrochemical performance was observed, compared to a cell using an anhydrous electrolyte.

In an alternative disclosed herein, the amount of water in the electrolyte is low, such as 1 wt % or less, 0.5 wt % or less, 0.25 wt % or less, or 0.01 wt % or less.
In one embodiment, the electrolyte is substantially anhydrous.
Here, the water content of the electrolyte may refer to the water content of a discharged cell. Thus, substantially all of the water has been consumed during the discharge reaction (i.e. to generate LiOH in the discharge reaction).

In an anhydrous cell, the amount of water in the electrolyte may increase with cycle number. As discussed below and in the worked examples, in an electrolyte having a very low water content (such as an anhydrous electrolyte) the initial source of H for LiOH is believed to be the electrolyte solvent (such as DME). However, during the charge step it is believed that LiOH is subsequently converted to lithium ions, oxygen and water. In later discharge steps it is believed that water is the predominant source of H for LiOH, with a reduced or minimal contribution from the solvent.

In the methods of the invention, the dominant source of hydrogen for the LiOH discharge product is not the solvent.

The methods of the invention require the formation and consumption of lithium hydroxide during the discharge and charging steps respectively. It follows that there should be a formal hydrogen source for the lithium hydroxide, for combination with lithium ion and oxygen.

The hydrogen source is water.

In an anhydrous cell, the hydrogen source may change during the cycling of the cell. Initially, the hydrogen source may be the solvent, particularly where the electrolyte is initially anhydrous. The cycling steps are believed to yield water as a charging product. Water may be the hydrogen source during subsequent discharging steps. In the method of the invention, the initial electrolyte contains water, and so water is the initial hydrogen source rather than the solvent.

The inventors have established that the solvent, such as DME, is the likely initial H source in an anhydrous cell. Previous DFT calculations, have suggested that iodine radicals tend to extract H⁺ from DME molecules, forming HI and causing polymerization of the DME (see Wu *et al*.).

In a lithium-oxygen battery, it is possible that l⁻ is oxidized to iodine radicals in the presence of O₂, O₂- or O₂²⁻ during the discharge step. Alternatively, direct nucleophilic attack by LiO₂ can also cause H⁺ extraction from DME molecules, forming a LiOOH intermediate that is eventually converted to LiOH *via* the action of Lil and LilO. This mechanism is suggested by Sun *et al.* in their recent study investigating the role of Lil in TEGDME within a lithium-oxygen battery.

The electrolyte may also have oxygen dissolved within. Oxygen is also present in the atmosphere in which the cell is located, and oxygen is at least present in the head space.

The electrolyte is provided with a mediator, which is also referred to as a catalyst within the art. The use of mediators with a lithium-oxygen battery is known in the art. For example, Lim *et al.* describe the use of a mediator (or catalyst) to improve the rechargeability and efficiency of the battery. The use of mediator species has been shown by Kim *et al.* to reduce the overpotential in the electrochemical cell, thereby improving cyclability of the system. A mediator may be regarded as an electron-hole transfer agent (or an electron transfer agent) between the solid electrode and the solid discharge product.

As noted above, the mediator may also be provided on the surface of the working electrode. For example, Jung *et al.* describe the use of a mediator (electrocatalyst) supported on a carbon electrode for use in a lithium-oxygen battery. However, it is preferred that the mediator is located in the electrolyte.

The oxidised and reduced forms of the mediator are soluble in the electrolyte. The oxidised and reduced forms of the mediator should also have chemical stability within the charged and discharged cells. Thus, the mediator is expected to have recyclability within the cell, thereby to fulfil its role as a catalyst within the system.

It is noted that the redox chemistry of the mediator may be complicated, and a mediator may have multiple oxidation states, and/or multiple chemical forms. For example, the present case described the use of iodide chemistry. The basic mediator couple is l⁻/l₃⁻. In addition, where oxygen is present in the cell, is it is possible that lO⁻ and lO₃⁻ species are also present, formed from the reaction of oxygen with l⁻ and l₂.

The inventors have also found that the mediator is capable of controlling the identity of the discharge product, as well as modifying the gross structure of the discharge product.

For example, in the absence of a mediator within the cell, the inventors have found that Li₂O₂ is the predominant discharge product. Addition of the mediator favours formation of LiOH as the predominant discharge product.
Further, the inventors have found that the Li₂O₂ product formed in the electrode porosity, in the absence of the mediator, has an average largest dimension that is less than 1 µm. In contrast, the LiOH product formed in the electrode porosity, in the presence of the mediator, has an average largest dimension that is greater than 15 µm.

Thus, the inventors believe that the mediator has multiple roles within the cell. As noted above, the mediator operates as a traditional mediator to guide the charge voltage in the cell, such as to reduce the charge voltage, which in turn alters the cycling stability of the cell, typically to improve the cycling stability.

Lim *et al.,* Kwak *et al.,* and Chen *et al.* have shown that the use of a mediator in a lithium-oxygen battery improves recharging rates and facilitates oxygen evolution during decomposition of the discharge product.

The mediator may also reduce the overpotential in the cell for discharge.
In one embodiment, the mediator is a compound capable of reducing the overpotential during a charge reaction. In one embodiment, the mediator reduces the overpotential by 0.1 V or more, 0.2 V or more, 0.3 V or more, 0.4 V or more, or 0.5 or more.

The reduction in overpotential is a comparison with a cell where the mediator is not present.

In one embodiment, the mediator reduces the charge potential of the cell to less than the thermodynamic voltage of the Li-O₂ reaction. Thus, the charge potential may be less than 2.96 V, such as 2.95 V or less.

The inventors believe that during charge, the redox mediator is first electrochemically oxidized on the electrode, and this oxidized form then chemically decomposes the LiOH discharge product. Consequently, where the charge voltage is less than 2.96 V, the charge voltage reflects the redox potential (vs. Li/Li⁺) of the redox mediator in the cell rather than the redox potential associated with the oxidation of the solid discharge product (i.e. LiOH). Therefore the redox potential of the mediator can strongly influence the charge voltage profile in a lithium-oxygen cell, and thus the long term stability of O₂ electrodes.

In one embodiment, the mediator reduces the voltage gap between the charge and discharge plateaus to 0.4 V or less, 0.3 V or less, or 0.2 V or less. The inventors have found that the band gap may be reduced to around 0.2 V.

An overpotential value or a voltage gap value may be as determined during a charge/discharge cycle at a specified capacity, for example at 100, 200 or 300 mAhg⁻¹, at a specified cycling rate, such as 0.01 or 0.02 mA/cm².

In one embodiment, the charge potential remains substantially constant during the charge. The inventors have found that the charge potential does not increase when a mediator is used together with a hierarchically macroporous electrode, such as a hierarchically macroporous rGO electrode. The use of the hierarchically macroporous electrode is preferred over other electrodes types, such as SP carbon electrodes, where the charging potential is seen to increase during the charge cycle. The difference in performance is believed to be due to the macroporous network allowing for a more efficient mediator diffusion compared with a mesoporous system. This benefit is observed even when the macropores are filled with the insoluble discharge product.

In one embodiment, the charge potential is substantially the same at two specified capacities, such as two capacities selected from 100, 200, 300, 400 and 500 mAhg⁻¹, at a specified cycling rate, such as 0.01 or 0.02 mA/cm² The charge potential is substantially the same if the measured potentials differ by no more 10%, no more than 5%, no more than 2%, or no more than 1%. For example, Figure 1 shows that the charge potential in a cell having a rGO electrode and a Lil mediator in DME is substantially unchanged between 100 and 500 mAhg⁻¹.

The redox potential of the mediator may be influenced by the electrolyte solvent. The inventors have found that a change in solvent may reduce the charge voltage. For example, it has been found that the charge potential is reduced when the solvent in the electrolyte is changed from TEGDME to DME. This effect is observed for all electrode materials tested (such as rGO, TiC and SP).

A change in solvent may also reduce the voltage gap between the charge and discharge plateaus (this effect is also observed in the redox peaks of the CV experiments, as shown in the worked examples). For example, it has been found that the voltage gap is reduced when the solvent in the electrolyte is changed from TEGDME to DME.

These effects are believed to be related to the viscosity of the solvent, with a less viscous solvent, such as DME, exhibiting a greater reduction in charge potential and a greater reduction in the voltage gap. The use of high viscosity solvent is thought to reduce the diffusion rate of the mediator. Indeed, the inventors have also observed that the discharge capacity of a cell is always smaller that the previous charge capacity, indicating that the mediator, after oxidation, has diffused into the bulk electrolyte. This difference in capacity is more prominent in those cells having a low viscosity solvent, such as DME. This suggests that there is faster mediator diffusion in a solvent such as DME compared with TEGDME.

Thus, in one embodiment, the solvent has a low viscosity, such as a low dynamic viscosity. In one embodiment, the solvent has a viscosity of 0.30 cP or less, such as 0.30 cP or less, 0.20 cP or less, such as 0.15 cP or less, as measured at 25°C. For example, DME has a dynamic viscosity of 0.122 cP at 25°C.

The mediator allows a LiOH discharge product to be removed in a charge cycle with a very low overpotential. Accordingly, it is possible to use LiOH in place of Li₂O₂ in a lithium-oxygen battery. An immediate consequence is that this cell becomes insensitive to relatively high levels of water contamination.

The use of the mediator is also associated with the growth of large LiOH crystals, and such efficiently take up the pore volume of the porous working electrode. It is for this reason that the cell has a very large experimentally observed capacity.

The mediator should be soluble in the electrolyte. Further the mediator is unreactive to the electrolyte solvent, and is also unreactive to the counter electrode (which is typically a Li metal anode).
In one embodiment, the mediator has a redox potential that is higher than the equilibrium potential of LiOH formation.
In one embodiment, the oxidised form of the mediator is capable of decomposing LiOH. The mediator oxidises LiOH, thereby generating oxygen.

In the invention, the mediator is an iodine-based mediator having an l⁻/l₃⁻ couple). The meditator may be provided in the electrolyte as Lil. Molecular iodine (l₂) may additionally also be added to the electrolyte. The use of iodine ion (iodide) as a mediator described by Kwak *et al.* and Lim *et al.* As noted above, iodide mediator chemistry may also involve the formation and degradation of IO⁻ and IO₃⁻ species.

In the methods of the present case the predominant discharge product is LiOH rather than Li₂O₂, which is usual discharge product described in the art. The formation of a LiOH product is associated with the use of the mediator. Although there is a difference in discharge product may parallel phenomena are observed during the formation of the LiOH and Li₂O₂.

On discharge, the first step appears to be an electrochemical reaction, where O₂ is reduced on the electrode surface and combines with a Li⁺ ion to form LiO₂. This is consistent with the overlapping discharge voltage at 2.75 V observed with and without added Lil (see Figure 1A). It is unlikely that with such a small overpotential (0.2 V) O₂ is directly reduced to O₂²⁻ or even dissociatively reduced to O²⁻ (or LiOH). In the next steps, either Li₂O₂ or LiOH could precipitate out of the solution either by chemical reduction by Lil/HI or by disproportionation, as proposed in earlier studies for Li₂O₂ (see Adams *et al*.; Peng *et al.*).

The formation of LiOH *via* a solution mechanism is supported by the fact that LiOH is observed to grow on both the electrode and insulating glass fiber separators, which are not electrically connected to the current collector. The LiO₂ disproportionation mechanism is likely to dominate at low Lil concentrations, as seen in prior work (Kwak *et al.).* It is unlikely that that LiOH is formed *via* a Li₂O₂ (solid) intermediate, at least for 0.05 M Lil, as no Li₂O₂ is observed as a product, even when battery cycling is performed at high rates.

As disclosed herein, the mediator is redox active organic compound, such as tetrathiafulvalene (TTF). The use of such compounds as mediators is described by Chen *et al.*

The mediator may be present at a concentration of at least 1 mM, at least 5 mM, at least 10 mM or at least 20 mM

The mediator may be present at a concentration of at most 100 mM, at most 200 mM, at most 500 mM, at most 1 M or at most 5 M.
In one embodiment, the mediator is present within the electrolyte at a concentration selected from a range with the upper and lower limits taken from the values given above. For example the mediator is present within the electrolyte at a concentration in the range 10 to 100 mM.
In one embodiment, the mediator is present at about 20 mM or about 50 mM.

The concentration of the mediator refers to the total concentration of mediator including both oxidised and reduced forms of the mediator.

Optionally, the electrolyte may comprise other components, to assist in the formation of LiOH in the discharge step, and the consumption of LiOH in the charge step. These agents may be provided in order to increase the rate performance of the battery or to minimise reaction zone issues.

### Use

Also disclosed herein is the use of lithium hydroxide as an oxygen source, such as the predominant oxygen source, in the charging of a lithium-oxygen battery. As noted above, it is typical in the art to use Li₂O₂ as the oxygen source in a lithium-oxygen battery.

Additionally, disclosed herein is the use of lithium hydroxide as the predominant lithium discharge product in the discharging of a lithium-air battery. As noted above, it is typical in the art to use Li₂O₂ as the predominant lithium discharge product in a lithium-oxygen battery.

### Other Preferences

Each and every compatible combination of the embodiments described above is explicitly disclosed herein, as if each and every combination was individually and explicitly recited.

Various further aspects and embodiments of the present invention will be apparent to those skilled in the art in view of the present disclosure.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

Certain aspects and embodiments of the invention will now be illustrated by way of example and with reference to the figures described above.

### Experimental

### General

As an example, a Li-O₂ battery was prepared with a Li metal anode, a 0.25 M lithium bis (trifluoromethyl) sulfonylimide (LiTFSI) / dimethoxyethane (DME) electrolyte with 0.05 M Lil additive, and a variety of different electrode structures, including mesoporous SP carbon, mesoporous titanium carbide (TiC), and macroporous reduced graphene oxide (rGO) electrodes. The hierarchically macroporous rGO electrodes (binder-free) were used because they are light, conductive and have a large pore volume that can potentially lead to large capacities. Mesoporous SP carbon and TiC (Ottakam Thotiyl *et al*.) electrodes were studied for comparison.

Cyclic voltammetry (CV) measurements confirmed that rGO, SP and TiC electrodes all exhibit good electrochemical stability within a voltage window of 2.4-3.5 V in a LiTFSI/DME electrolyte and can be used to reversibly cycle Lil (l₃-+2e⁻↔3l⁻) (Hanson *et al*.).

As described below, changes in the electrolyte solvent were also studied.

The detailed experimental work is described below.

### Materials

1,2-Dimethoxyethane (DME) (Sigma Aldrich, 99.5%) and tetraethylene glycol dimethyl ether (TEGDME) (Sigma Aldrich, 99%) solvents were refluxed with sodium metal prior to fractional distillation, and then stored over 4 A molecular sieves. The final water content of the solvents was measured to be below 10 ppm by Karl Fischer titration (Metrohm 899). Molecular sieves were washed with ethanol and acetone, dried overnight in an oven at 70°C and then at 275°C *in vacuo* for two days. Lithium bis(trifluoromethyl)sulfonylimide (LiTFSI) (3M Fluorad™, HQ115) and Lil (Sigma-Aldrich, 99.9%) were dried at 160°C and 200°C, respectively, *in vacuo* for 12 hours before being used to prepare the electrolyte. Super P (SP) carbon black (∼50 nm) and TiC nanoparticles (∼40 nm) were purchased from Timcal and Skyspring nanomaterials respectively. All materials were stored and handled in an Ar glovebox with < 0.1 ppm O₂ and < 0.1 ppm H₂O.

### Electrode Fabrication

Mesoporous SP carbon electrodes were prepared from a mixture of 24 wt % SP carbon black, 38 wt % polyvinylidene fluoride (PVDF, copolymer) binder, and 38 wt % dibutylphthalate (DBP, Sigma-Aldrich) in acetone. The slurry was then spread into a self-supporting film and cut into discs of ½ inch (ca. 1.27 cm) in diameter and washed with diethyl ether to remove the DBP. The resulting films were then annealed at 120°C *in vacuo* for 12 hours and transferred to the glovebox without exposure to air. The final carbon content in the electrodes was 39 wt %.

Mesoporous TiC electrodes were prepared by a similar method, with carbon being replaced by TiC. A mixture of 49 wt % TiC, 8 wt % PVDF and 44 wt % DBP was used with acetone to make the slurry. The subsequent film making and drying method are exactly the same as used for fabricating SP carbon electrodes.

Aqueous graphene oxide solution was synthesized by a modified Hummer's method (46). Briefly, concentrated H₂SO₄ (96 mL) was added to a mixture of graphite flakes (2 g) and sodium nitrate (2 g), which was stirred at 0°C in a water/ice bath. KMnO₄ (12 g) was then gradually added and the mixture was continuously stirred at 0°C for 90 minutes. The reaction temperature was subsequently raised and kept at 35°C for 2 hours, after which deionized water (80 mL) was slowly added to the suspension. Additional water (200 mL) and H₂O₂ (30%, 10 mL) were introduced. At this point, a suspension of graphite oxides was obtained. This graphite oxides suspension was allowed to settle down and the clear solution at the top was repeatedly removed and replaced with deionized water until the suspension becomes neutral. The resulting slurry of graphite oxide was subjected to many ultrasonication and centrifugation cycles until no sediment was found at the bottom of the centrifuge tube. A well-dispersed aqueous graphene oxide solution was finally synthesized.

To fabricate reduced graphene oxide (rGO) electrodes, the obtained graphene oxide solution was first concentrated by annealing it in a vial at 80-100°C to form a viscous gel that had a graphene oxide concentration of -10 mg/mL. The gel was cast onto a stainless steel (ss) mesh (Advent Research Materials) using a volumetric pipette and then frozen and stored in a vial in liquid N₂. The graphene oxide electrodes on ss-meshes were freeze-dried for 12 hours *in vacuo* and then subjected to pyrolysis in a furnace under Ar at 550°C for 2 hours, to obtain rGO electrodes. These electrodes were further dried at 150°C *in vacuo* before being used to make batteries. The masses of rGO electrodes were carefully measured by comparing the masses of a few bare meshes with their respective masses after the rGO electrodes had been coated, an average value being taken for a specific batch of electrodes.

### Li-O₂ Cell Assembly

All Li-O₂ cells described herein are based on a Swagelok design. The cells were assembled by stacking a disc of lithium foil (0.38 mm thickness, Sigma-Aldrich), 2 pieces of borosilicate glass fibre separators (Whatman) soaked with electrolyte and an O₂ positive electrode (SP, TiC or rGO).

The electrolytes used in this study include 0.25 M LiTFSI/DME or 0.25 M LiTFSI/TEGDME with/without the addition of 0.05 M Lil. A 0.5 cm² hole was drilled through the current collector, so that the positive electrode can readily access O₂ The assembled Swagelok cell was then placed in a 150 mL Li-O₂ glass chamber, the two electrodes being electrically wired to two tungsten feedthroughs. Pure O₂ was purged through the chamber via two Young's taps for 25 minutes, and the cell was then rested for 10 hours before cycling. The volume of TEGDME-containing electrolyte used in a cell was typically 0.2 mL. DME-containing electrolyte was found to be more volatile and evaporated rapidly during the O₂ purge, to be absorbed into the viton rubber coating of the electrical cables (this latter problem occurs due to the current in-house design of our Li-O₂ cells and can be avoided using better cell designs). Consequently, DME was used within the electrolyte at around 0.7-1 mL was used for a cell.

The electrode loading in this work ranged from 0.01 to 0.15 mg and the thickness of the rGO electrodes varied from 30 to 200 µm. For Li-O₂ cells subjected to more prolonged cycling, thinner electrodes (30-50 µm) were used. The cycling rate was quoted based on the mass of carbon in an electrode. For example, 5 A/g_{c} rate (see Figure 4B) of a 0.01 mg electrode is equivalent to cycling the cell at a current of 50 uA, giving a rate per unit area of 0.1 mA/cm². The electrochemical measurements (Galvanostatic discharge/charge, cyclic voltammetry) were conducted using either an Arbin battery cycler or a Biologic VMP.

All potentials are referenced against Li/Li⁺.

### Electrode Characterization

For all cells, the characterization of electrodes involved first disassembling the cell, rinsing the O₂ positive electrode twice in dry acetonitrile (<1 ppm H₂O, each time with 2 mL acetonitrile for 30 minutes). The washed electrodes were then dried *in vacuo* overnight for further characterization.

X-Ray diffraction (XRD) measurements were performed with a Panalytical Empyrean diffractometer operated in a reflection mode, with Cu Kα1 radiation (λ = 1.5406 A). The cycled electrode was sandwiched between two Kapton polyimide films in an air tight sample holder.

Scanning electron microscopic (SEM) images were recorded with a Hitachi S-5500 in lens field emission electron microscope. The electrode samples were hermetically sealed during transfer to the electron microscope. Once the seal was opened, the sample was loaded into the high vacuum SEM chamber within 10 seconds.

All solid-state NMR (ssNMR) spectra were acquired on either a 16.4 T Bruker Avance III or an 11.7 T Bruker Avance III spectrometer using 1.3 mm HX probes. A rotor synchronized Hahn-echo pulse sequence was used to acquire ¹H magic angle spinning (MAS) spectra with a spinning speed of 60 kHz (unless stated otherwise), and an rf field strength of 125 kHz. A one-pulse sequence was used to acquire ⁷Li NMR spectra under MAS and static conditions, with an rf field strength of 167 kHz. ¹H and ⁷Li shifts were externally referenced to solid adamantane at 1.8 ppm and lithium carbonate at 0 ppm, respectively. The same receiver gain, number of scans and recycle delay values (optimized values of between 10-20 s were used) were employed to measure the electrodes (from the same batch) to allow quantitative comparison between spectra.

### Electrochemistry of Li-Oxygen Battery

Figure 1 (a) compares the electrochemistry of SP, TiC and rGO electrodes, with and without an added LiI mediator. In the absence of LiI, cells using either mesoporous TiC or macroporous rGO showed much smaller overpotentials during charge, in comparison to the overpotential obtained with the mesoporous SP carbon electrode. The decrease in overpotential is tentatively associated with the higher electrocatalytic activity of TiC (Adams *et al*.) and the faster diffusion of Li⁺ and solvated O₂ within the micron-sized pores of the rGO electrodes.

The addition of the redox mediator LiI to the SP electrode led to a noticeable drop in the overpotential over that seen with SP only, suggesting that the polarization during charge is largely caused by the insulating nature of the discharge products. The charge voltage profile is, however, not flat, but gradually increases as the charge proceeds to above 3.5 V. By contrast, when LiI is used with hierarchically macroporous rGO electrodes, a remarkably flat process is observed at 2.95 V, representing a further reduction in overpotential by around 0.5 V over that seen for SP. This reduction is ascribed to the interconnecting macroporous network in rGO electrodes, which allows for much more efficient mediator diffusion than in the mesoporous SP electrode, even when the macropores are filled with insoluble discharged products.

The observation that the Lil/DME Li-oxygen cell charges at 2.95 V is of note, as it is slightly below the thermodynamic voltage of 2.96 V of the Li-O₂ reaction. During charge, it is thought that the redox mediator is first electrochemically oxidized on the electrode, and this oxidized form then chemically decomposes the discharge product (see Chen *et al*.). Consequently, the charge voltage here reflects the redox potential (vs. Li/Li⁺) of the I⁻/I₃⁻ redox mediator in the electrode/electrolyte system rather than the redox potential associated with the oxidation of the solid discharge product. The redox potential of a mediator strongly influences the charge voltage profile in a Li-O₂ cell, and thus the long term stability of O₂ electrodes.

To investigate factors affecting the redox potential, LiI was cycled galvanostatically in an Ar atmosphere with different electrode/electrolyte combinations (Figure 1 (b)). It was found that the electrolyte solvent has a larger effect on the redox potential of the I⁻/I₃⁻ couple than the electrode material, with the DME electrolyte consistently exhibiting lower charge voltages than TEGDME (tetraethylene glycol dimethyl ether) for all three electrodes. In addition, the voltage gaps between the charge and discharge plateaus are smaller for DME than TEGDME electrolytes, consistent with the smaller voltage separations seen between the redox peaks in their respective CV curves (see also Figure 6). This observation implies that higher potentials are required to drive the redox reaction (3I⁻ ↔ I₃⁻ + 2e⁻) in TEGDME than in DME, at the same rate. Given that the same electrode material and structure are used, this phenomenon is tentatively associated with the higher viscosity of TEGDME, which results in more sluggish mediator diffusion.

Figure 1 (b), the discharge capacity is always smaller than the previous charge capacity for all cells, indicating that some mediators after being oxidized have diffused into the bulk electrolyte. This observation being more prominent in cells with DME electrolyte also suggests faster mediator diffusion in DME than in TEGDME.

### SEM and Electrochemical Investigation of the Electrode Materials

Three types of working electrodes were tested in order to evaluate effect of the electrode material to the charge overpotential, such as catalytic effects of different electrode materials, concentration polarization due to the diffusion of electrode active species and ohmic loss caused by the insulating discharge product. The electrodes were rGO, SP and TiC working electrodes.

The rGO electrodes contain much larger pore sizes and pore volumes than SP electrodes, which will lead to a lower tortuosity and thus more efficient diffusion of the active species within the electrolyte (Li⁺, solvated O₂. mediators etc.) in rGO than in SP (see Figures 5(a) to (d) for the rGO SEM images, and Figure 5(e) for the SP SEM images). Therefore the smaller overpotential for rGO electrode compared with SP is ascribed to the interconnecting macroporous framework.

SP carbon and TiC electrodes are comprised of particles of similar sizes (∼50 nm) and are made by the same fabrication method (see Figure 5 (f) for the TiC SEM images). SP and TiC have similar mesoporous electrode structures. The difference in the electrochemical performance between SP and TiC electrodes is tentatively attributed to the difference in their intrinsic catalytic activities (see Figure 1 (a)).

It is important to note that it is difficult to separate unambiguously the different contributions to the overpotential (e.g., the activation barrier of the reaction, ohmic loss, diffusion of active species). When comparing the SP with TiC electrodes, for example, it is difficult to ensure that the electrical resistance and surface areas of the electrodes are identical even if the pore structure is similar. Thus, the current method of comparison (as shown in Figure 1) gives a qualitative estimation of the various origins for the charge overpotentials rather than a quantitative evaluation.

As shown in Figure 6 (a), rGO and SP carbon electrodes exhibit good stability within the voltage window 2.4-3.5 V, and gradually rising cathodic and anodic currents were observed out of this voltage range. Compared with rGO and SP elecrodes, the TiC electrode is a less inert electrode material in LiTFSI/DME: rapidly rising cathodic and anodic currents were observed below 2.5 and 3.75 V, respectively.

Figures 6 (b) and (c) show that rGO, SP and TiC electrode all reversibly cycle LiI (3I⁻ ↔ I₃⁻ + 2e⁻). In Figure 6 (b), the separation between the redox peaks of I⁻/ I₃⁻ in TEGDME-based electrolyte (blue curve) is wider than that in DME-based electrolyte (red curve). This is probably associated with the higher viscosity of TEGDME and hence a slower diffusion of the mediator in this electrolyte.

### Hydrogen Source for LiOH Formation

The same experimental procedures were followed for electrolyte solvent purification, electrode fabrication, drying individual cell components (solvent, Li salt, separators, Swagelok cell parts etc.) and electrode characterization for all batteries in this work.

If no LiI is added to the 0.25 M LiTFSI/DME electrolyte, Li₂O₂ is the predominant product after discharge. The ssNMR and SEM images are consistent with a Li₂O₂ discharge product (see Figure 7, and discussed in further below).

These experimental results rule out many possible H sources including the H₂O impurities from O₂ gas, wet glass fibre separators and Swagelok cell parts and wet acetonitrile used to wash cycled electrodes.

It was postulated that the hydrogen source for the LiOH discharge product was the surface functional groups on the rGO electrodes. A representative cell electrode with a pristine weight of 0.1 mg was found to weigh approx. 1.6 mg after discharge. XRD and NMR measurements show that the increased weight was due to formation of LiOH crystals, i.e. 1.5 mg LiOH. To produce 1.5 mg LiOH, 0.0625 mg of H was required, which is more than half the weight of the pristine rGO electrode. It was therefore concluded that H from rGO is unlikely to be the H source for LiOH. ¹H ssNNR of a pristine rGO electrodes reveals only a low proton content.

The water content of DME solvent in use was measured by Karl Fischer apparatus to be less than 10 ppm. Approximately 1 mL electrolyte solvent was used for a battery, which gives a water content in the solvent of 1 cm³ × 0.8683 g/cm³ × 10 ppm = 0.0086 mg H₂O. This is two orders of magnitude less than needed (1.1 mg of H₂O) to generate 1.5 mg of LiOH. Hence, it is also unlikely that wet electrolyte solvent was the source of H.

There was the possibility that the H source was water from moist air that had leaked into the sealed Li-O₂ battery. To test whether this was possible, a Li-O₂ battery was discharged inside an Ar glovebox (H₂O < 0.1 ppm). ssNMR measurements, performed at 11.7 T, (Figure 8) of the discharged rGO electrode showed that LiOH was still the prevailing discharge product Moist air entering into the battery was therefore excluded as a possible H source for the LiOH discharge product.

If H was provided by the DME solvent, in order to produce 1.5 mg LiOH, 62.5 µmol H is needed, i.e. 5.6 mg DME (62.5 µmol × 90.12 g/mol) is required (assuming that the molar ratio of consumed DME to H is 1:1)). This is equivalent to only 6.4 µL DME (5.6 mg/868.3 mg/cm³). In this work, around 1 mL DME was used as a solvent in the electrolyte.

It is suggested that DME is the H source for the production of LiOH during the first discharge process. It is important to point out, however, that water is probably formed during the subsequent charge process and it accumulates with cycle number. This cumulative water is likely to also participate in the discharge process and provide H to form LiOH, slowing down the decomposition of DME solvent.

### Li-O₂ Batteries Cycled at Higher Rates

When a cell is cycled at a higher rate, such as 8 A/g_{c}, the cell voltage polarizes rapidly with cycles, probably due to more side reactions at these more reducing (discharge) and oxidizing (charge) electrochemical potentials, and incomplete removal of discharge product. As a result, the rGO electrode surface was covered by many particles after just 40 cycles (as observed in the SEM image shown in Figure 9(c)).

### ⁷Li NMR Characterization of the Discharge Products in the Presence of LiI and O₂

LiOH, Li₂CO₃ and Li₂O₂ were analysed by ⁷Li static NMR and the recorded spectra were compared with the ⁷Li static NMR spectrum of a discharged rGO electrode sample. The combined spectra are shown in Figure 10.

The characteristic quadrupolar line shape of the discharged rGO electrode sample overlaps with that of LiOH, rather than Li₂CO₃ and Li₂O₂, suggesting the discharge product is overwhelmingly LiOH (see also Leskes *et al.* (2012) and Leskes *et al.* (2013)).

### SEM Characterization of the Discharge Products with LiI

A discharged rGO electrode was analysed by SEM. Numerous large particles were seen to fill the pores of the rGO electrode (see Figure 11(a)). The rGO electrode was cut open and the interior space investigated (as observed in Figures 11(b) to (c)). Many flower-like particles larger than 15 µm were observed. Some of these particles grown even on the insulating glass fibre separators (d), indicating that these LiOH crystals were formed via a solution precipitation process.

### Li-O₂ Cells Cycled in the Presence of High Concentrations of Water

Experiments were performed to show the insensitivity of the Li-O₂ cell to water. No noticeable difference was seen in the electrochemical performance, compared to cells cycled with anhydrous electrolyte and dry O₂, which demonstrates that the cell is insensitive to H₂O contamination at least at the levels investigated here (37 mg H₂O per 783 mg of DME, i.e. 45,000 ppm H₂O). The cells were cycled for 100 cycles.

### Study of Cell Using LiI in TEGDME

The discharge reaction was studied in a cell using a TEGDME solvent in place of DME.

When the battery was discharged at a relatively slow rate of 100 mA/gc, a voltage plateau at 2.7 V was observed (Figure 12 (a)). In the ssNMR spectra (b), acquired at 16.4 T, resonances at -1.5 and 8.3 ppm in the ¹H MAS spectrum indicate the existence of LiOH and Li formate, respectively, LiOH being the dominant product; the resonance at 4.8 ppm is attributed to water and those at 3.3 and 0.7 ppm are ascribed to residual TEGDME solvent in the electrode. The single resonance at 1.0 ppm and the characteristic line shape of quadrupolar ⁷Li static ssNMR spectrum with satellite transition peaks further confirm that LiOH is the predominant discharge product.

SEM images of the discharged rGO electrode (shown in Figure 12 (c)) reveal that instead of forming large flower-like particles as seen with the DME-based electrolyte, LiOH exist as a thin film covering the rGO electrode surface. This results in a lower discharge capacity since the electrode becomes covered with an insulating film at lower discharge capacities.

### Study of Cell Using SP Carbon Electrode

The discharge reaction was studied in a cell using a SP carbon electrode in place of an rGO electrode.

When the cell was discharged at 70 mA/g_{c}, a voltage plateau at 2.65 V (Figure 13 (a)) was observed. In the ssNMR spectra (b), a dominant resonance at -1.5 ppm in 1H and a single resonance at 1.0 ppm in ⁷Li ssNMR spectrum suggest that LiOH is the main discharge product (see Figure 13 (b)). This is further corroborated by the ⁷Li static spectrum. The resonance at 4.8 ppm in ¹H ssNMR spectrum is attributed to water and those at 3.3, 2.6 and 1.0 ppm are ascribed to residual DME solvent in the electrode.

SEM images of the discharged electrode reveal that LiOH exhibit disc and sheet-like morphology (see Figure 13 (c)). Notably, these discs/sheets of LiOH are of -500 nm in size, much smaller than those observed in rGO electrodes (see Figure 11) even though the same electrolyte was used. After full charge, many surface regions of the SP electrode became bare again, although in some regions residual LiOH was still observed. This observation suggests that LiOH can indeed be removed during charge in the current electrode/electrolyte system, even if it is not complete.

### ⁷Li and ¹H NMR and SEM Characterization of the Discharge Products in the Absence of LiI

Figure 7(a) shows that the rGO electrode exhibits higher discharge capacities when LiI is present in the electrolyte (red curve) compared with a system where LiI is not present (blue curve). The higher capacity results from the much larger concentration of discharge products (LiOH) that more efficiently take up the pore volume in macroporous rGO electrodes in the latter case (see Figure 11).

The black curve in Figure 7 (a) represents a cell with an rGO electrode in 0.05 M LiI/0.25 M LiTFSI/DME electrolyte galvanostatically discharged in an Ar atmosphere: its capacity is negligible compared to that cycled in an O₂ atmosphere (red curve).

A discharged rGO electrode from a cell where LiI was not present was analysed by NMR. The NMR spectra are shown in Figure 7 (b). A single resonance at 0 ppm in the ⁷Li MAS ssNMR spectrum (acquired at 16.4 T) and the absence of satellite transition peaks in the ⁷Li static ssNMR spectrum suggest that Li₂O₂ is the predominant discharge product (see Figure 10) when LiI is absent. ¹H MAS ssNMR measurement shows a resonance at -1.5 ppm, suggesting LiOH is also present in the discharge products. The resonances at 2.3 and 8 ppm are attributed to the residual DME solvent and lithium formate, respectively, in the electrode.

SEM images of the discharged electrode are shown in Figures 7 (c) and (d). The images reveal that the electrode surfaces are fully covered by toroidal particles (-500 nm), which is a characteristic morphology for Li₂O₂, consistent with the ssNMR measurements.

### Capacity Comparison Between I⁻/I₃⁻ Redox Activity and Li-O₂ Cells

The capacity of a Li-iodine redox battery is typically evaluated based on the mass of iodine (the active material), which gives a theoretical capacity of 211 mAh/g (i.e., [(96485/3.6) mA]/127 g). See, for example, Hummers *et al.*

The TEGDME-containing electrolyte used in the present case, the number of moles of I⁻ used was 2.1×10⁻⁵ mol, i.e., 2.7×10⁻³ g. The electrical charge extracted from the SP, TiC and rGO cells under an Ar atmosphere was 2.5×10⁻⁴, 5×10⁻⁴ and 7×10⁻⁴ mAh, respectively, giving only 0.09, 0.18, 0.26 mAh/gₗ, much lower than the theoretical capacity based on the I⁻ /I₃⁻ couple and the total I⁻ present in the cell. This indicates that the majority of the active material did not participate in the electrochemical reaction. This is not, however, surprising, as no effective convection is available in the cells. As a result, the capacity is solely dependent upon the self-diffusion of electroactive species. Similar values are obtained for cells using the DME electrolyte, being 0.18, 0.18, 0.07 mAh/gₗ for SP, TiC and rGO cells, respectively.

In the Li-O₂ cell for use in the present invention, the capacity is calculated based only on the mass of electrode material (SP carbon, TiC, or rGO). To allow the capacity obtained with and without O₂ to be compared, the capacity of LiI cells based on the mass of the electrode materials was calculated, as illustrated in Figure 15. It is clear that the specific capacities of all three electrodes cycled under Ar are much smaller than those of the Li-O₂ batteries, when using the same electrode materials.

### References

Adams et al. ACS Nano, 8, 12483 (2014).
Adams et al. Energy Environ. Sci. 6, 1772 (2013).
Aetukuri, et al., Nat. Chem. 7, 50 (2015).
Bruce et al. Nat. Mater. 11, 19 (2012).
Chen et al. Nat. Chem. 5, 489 (2014).
Freunberger et al. Angew. Chem. Int. Ed. 50, 8609 (2011).
Freunberger et al. J. Am. Chem. Soc. 133, 8040 (2011).
Gallant et al. Energy Environ. Sci. 6, 2518 (2013).
Gallant et al. J. Phys. Chem. C 116, 20800 (2012).
Girishkumar et al. J. Phys. Chem. Lett. 1(14), 2193 (2010).
Gittleson et al. Phys. Chem. Chem. Phys. 16, 3230 (2014).
Gowda et al. J. Phys. Chem. Lett. 4, 276 (2013).
Guo et al. J. Power Sources 264, 1 (2014).
Hanson et al. J. Electrochem. Soc. 134, 2204 (1987).
Hummers et al. J. Am. Chem. Soc. 80 (6), 1339 (1958).
Hyoung Oh et al. Adv. Energy Mater. 2, 903 (2012).
Hyoung Oh et al. Nat. Chem. 4, 1004 (2012).
Johnson et al. Nat. Chem. 6, 1091 (2014).
Jung et al. ACS Nano 7, 3532 (2013).
Kwak et al. J. Mater. Chem. A, 3, 8855 (2015).
Lacey et al. Electrochem. Commun 26, 74 (2013).
Leskes et al. Angew. Chem. Int. Ed. 51, 8560 (2012).
Leskes et al. J. Phys. Chem. C 117(51), 26929 (2013).
Leskes et al. J. Phys. Chem. C 117(51), 26929 (2013).
Lim et al. Angew. Chem. Int. Ed., 126, 4007 (2014).
Lim et al. J. Am. Chem. Soc. 135, 9733 (2013).
Lim, et al. Adv. Mater. 25, 1348 (2013).
Liu et al. Energy Environ. Sci. 7, 677 (2014).
Lu et al. Energy Environ. Sci. 6, 750 (2013).
Lu et al. Nat. Comm. 4, 1 (2013).
Lu, et al. J. Am. Chem. Soc. 133, 19048 (2011).
McCloskey et al. J. Am. Chem. Soc. 135, 18038 (2011).
McCloskey et al. J. Phys. Chem. Lett. 3, 997 (2012).
McCloskey et al., J. Phys. Chem. Lett. 2, 1161 (2011).
Mitchell et al. J. Phys. Chem. Lett. 4, 1060 (2013).
Nasybulin et al. J. Phys. Chem. C, 117, 2635 (2013).
Ottakam Thotiyl et al. J. Am. Chem. Soc. 135, 494 (2013).
Ottakam Thotiyl et al. Nat. Mater. 12, 1050 (2013).
Peng et al. Angew. Chem. Int. Ed. 50, 6351 (2011).
Saw et al. Energy Convers. Manage. 75, 162 (2013).
Stevens et al., ECS Trans. 28 (32), 1 (2010).
Sun et al. J. Am. Chem. Soc. 136, 8941 (2014).
Sun et al. Nano Lett. 14, 3145 (2014).
Wang, et al. Adv. Funct. Mater. 22, 3699 (2012).
Wu, et al., Adv. Mater. 27, 101 (2015).
Xiao, et al. Nano Lett. 11, 5071 (2011).
Yilmaz et al. Nano Lett. 13, 4679 (2013).
Zhai et al. J. Am. Chem. Soc. 135, 15364 (2013).

## Claims

1. A method for discharging and/or charging a lithium-oxygen battery, the method comprising:
(i) generating a discharge product on or within a working electrode in a lithium-oxygen battery in a discharging step, wherein the amount of LiOH in the discharge product is greater than the amount of Li₂O₂; and/or
(ii) consuming LiOH on or within a working electrode in a lithium-oxygen battery in a charging step, thereby to generate oxygen together with water, wherein the amount of LiOH consumed in the charging step is greater than the amount of Li₂O₂ consumed,
and the lithium-oxygen battery has an electrolyte comprising an organic solvent and an iodine-based redox mediator having an I⁻/I₃⁻ couple, wherein the water content of the electrolyte of a fully charged battery is 3 to 6 wt%.

2. The method of claim 1, wherein the method comprises step (i) and step (ii) in a discharge and charge cycle.

3. The method of claim 2, wherein the method comprises 2 cycles or more, 5 cycles or more, 10 cycles or more, 50 cycles or more, 100 cycles or more, 500 cycles or more, 1,000 cycles or more, or 2,000 cycles or more.

4. The method of any one of the preceding claims, wherein LiOH is the predominant discharge product in the discharging step.

5. The method of any one of the preceding claims, wherein the discharge product is substantially free of Li₂O₂.

6. The method of any one of the preceding claims, wherein LiOH is the predominant source of oxygen in the charging step.

7. The method of any one of the preceding claims, wherein:
(i) the cycling rate in the discharging and/or charging step is in the range 0.5 to 10 A/g, such as 1 to 5 A/g, such as 1 to 2 A/g; and/or
(ii) the maximum capacity of a working electrode of the lithium-oxygen battery is in the range 1,000 to 25,000 mAh/g, such as 1,000 to 10,000 mAh/g; and/or
(iii) the charge voltage in step (i) is at most 3.5 V, such as at most 3.0 V, such as the charge voltage measured at an electrode capacity of 100 mAh/g; and/or
(iv) wherein the difference between the charge voltage and the discharge voltage is 0.4 V or less, such as 0.2 V or less, such as the charge voltage and the discharge voltage measured at an electrode capacity of 100 mAh/g.

8. The method of any one of the preceding claims, wherein the electrolyte comprises:
(i) a polyalkylene glycol dialkyl ether solvent, such as wherein the electrolyte comprises a monoglyme (DME), diglyme, triglyme or tetraglyme (TEGDME) solvent, such as DME; and/or
(ii) lithium ions in the form of LiTFSI.

9. The method of any one of the preceding claims, wherein the lithium-oxygen battery has a porous working electrode, such as a porous carbon working electrode.

10. The method of claim 9, wherein the porous working electrode is:
(i) a macroporous working electrode, such as a macroporous carbon working electrode, such as an electrode having a porosity of at least 50 m²/g and/or a pore volume of at least 0.1 cm³/g, such as porosity and pore volume determined by N₂ adsorption isotherm analysis; or
(ii) selected from rGO (reduced graphene oxide), TiC (titanium carbide) and SP (Super P carbon black) working electrodes, such as an rGO electrode.

11. A fully charged lithium-oxygen battery having an electrolyte comprising an organic solvent and an iodine-based redox mediator having an I⁻/I₃⁻ couple, wherein the water content of the electrolyte is 3 to 6 wt%.

12. The charged lithium-oxygen battery of claim 11, wherein the organic solvent is a polyalkylene glycol dialkyl ether solvent, such as the electrolyte comprises a monoglyme (DME), diglyme, triglyme or tetraglyme (TEGDME) solvent, such as DME.

## Patentansprüche

1. Verfahren zum Entladen und/oder Laden einer Lithium-Sauerstoff-Batterie, wobei das Verfahren Folgendes umfasst:
(i) das Erzeugen eines Entladungsprodukts auf oder innerhalb einer Arbeitselektrode in einer Lithium-Sauerstoff-Batterie in einem Entladungsschritt, wobei die Menge von LiOH in dem Entladungsprodukt größer als die Menge von Li₂O₂ ist; und/oder
(ii) das Verbrauchen von LiOH auf oder innerhalb einer Arbeitselektrode in einer Lithium-Sauerstoff-Batterie in einem Ladungsschritt, um dadurch Sauerstoff gemeinsam mit Wasser zu erzeugen, wobei die Menge von in dem Ladungsschritt verbrauchten LiOH größer als die Menge von verbrauchtem Li₂O₂ ist,
und die Lithium-Sauerstoff-Batterie einen Elektrolyten aufweist, der ein organisches Lösungsmittel und einen lod-basierten Redox-Mediator umfasst, der ein I⁻/I₃⁻-Paar aufweist, wobei der Wassergehalt des Elektrolyten einer vollständig geladenen Batterie 3 bis 6 Gew.-% beträgt.

2. Verfahren nach Anspruch 1, wobei das Verfahren Schritt (i) und Schritt (ii) in einem Entladungs- und Ladungszyklus umfasst.

3. Verfahren nach Anspruch 2, wobei das Verfahren 2 Zyklen oder mehr, 5 Zyklen oder mehr, 10 Zyklen oder mehr, 50 Zyklen oder mehr, 100 Zyklen oder mehr, 500 Zyklen oder mehr, 1000 Zyklen oder mehr oder 2000 Zyklen oder mehr umfasst.

4. Verfahren nach einem der vorangegangenen Ansprüche, wobei LiOH das vorherrschende Entladungsprodukt in dem Entladungsschritt ist.

5. Verfahren nach einem der vorangegangenen Ansprüche, wobei das Entladungsprodukt im Wesentlichen frei von Li₂O₂ ist.

6. Verfahren nach einem der vorangegangenen Ansprüche, wobei LiOH die vorherrschende Sauerstoffquelle in dem Ladungsschritt ist.

7. Verfahren nach einem der vorangegangenen Ansprüche, wobei:
(i) die Taktrate des Entladungs- und/oder Ladungsschritts in dem Bereich von 0,5 bis 10 A/g, wie z. B. 1 bis 5 A/g, wie z. B. 1 bis 2 A/g, liegt; und/oder
(ii) die maximale Kapazität einer Arbeitselektrode der Lithium-Sauerstoff-Batterie im Bereich von 1000 bis 25.000 mAh/g, wie z. B. 1000 bis 10.000 mAh/g, liegt; und/oder
(iii) die Ladungsspannung in Schritt (i) maximal 3,5 V, wie z. B. 3,0 V, beträgt, wie z. B. die Ladungsspannung, die bei einer Elektrodenkapazität von 100 mAh/g gemessen wird; und/oder
(iv) wobei die Differenz zwischen der Ladungsspannung und der Entladungsspannung 0,4 V oder weniger, wie z. B. 0,2 V oder weniger, beträgt, wie z. B. die Ladungsspannung und die Entladungsspannung, die bei einer Elektrodenkapazität von 100 mAh/g gemessen wird.

8. Verfahren nach einem der vorangegangenen Ansprüche, wobei der Elektrolyt Folgendes umfasst:
(i) ein Polyalkylenglykoldialkylether-Lösungsmittel, wie z. B. eines, wobei der Elektrolyt ein Monoglyme- (DME-), Diglyme-, Triglyme- oder Tetraglyme- (TEGDME-) Lösungsmittel, wie z. B. DME-, umfasst; und/oder
(ii) Lithiumionen in Form von LiTFSI.

9. Verfahren nach einem der vorangegangenen Ansprüche, wobei die Lithium-Sauerstoff-Batterie eine poröse Arbeitselektrode, wie z. B. eine poröse Kohlenstoff-Arbeitselektrode, aufweist.

10. Verfahren nach Anspruch 9, wobei die poröse Arbeitselektrode:
(i) eine makroporöse Arbeitselektrode, wie z. B. eine makroproöse Kohlenstoff-Arbeitselektrode, wie z. B. eine Elektrode, die eine Porosität von zumindest 50 m²/g und/oder ein Porenvolumen von zumindest 0,1 cm³/g aufweist, wie z. B. eine Porosität und ein Porenvolumen, die durch eine N₂-Adsoprtionsisothermenanalyse bestimmt wurden, ist; oder
(ii) aus rGO- (reduziertem Graphenoxid-), TiC- (Titancarbid-) und SP- (Super-P-Kohlenstoff-schwarz-) Arbeitselektroden, wie z. B. rGO-Elektroden, ausgewählt ist.

11. Vollständig geladene Lithium-Sauerstoff-Batterie, die einen Elektrolyten aufweist, der ein organisches Lösungsmittel und einen lod-basierten Redox-Mediator umfasst, der ein I⁻/I₃⁻ -Paar aufweist, wobei der Wassergehalt des Elektrolyten 3 bis 6 Gew.-% beträgt.

12. Geladene Lithium-Sauerstoff-Batterie nach Anspruch 11, wobei das organische Lösungsmittel ein Polyalkylenglykoldialkylether-Lösungsmittel ist, wie z. B. eines, wobei der Elektrolyt ein Monoglyme- (DME-), Diglyme-, Triglyme- oder Tetraglyme- (TEGDME-) Lösungsmittel, wie z. B. DME-, umfasst.

## Revendications

1. Procédé de décharge et/ou de charge d'une batterie au lithium-oxygène, le procédé comprenant les étapes consistant à :
(i) générer un produit de décharge sur ou à l'intérieur d'une électrode de travail dans une batterie au lithium-oxygène dans une étape de décharge, dans lequel la quantité de LiOH dans le produit de décharge est supérieure à la quantité de Li₂O₂ ; et/ou
(ii) consommer le LiOH sur ou à l'intérieur d'une électrode de travail dans une batterie au lithium-oxygène dans une étape de charge, pour ainsi générer de l'oxygène conjointement avec de l'eau, dans lequel la quantité de LiOH consommée dans l'étape de charge est supérieure à la quantité de Li₂O₂ consommée,
et la batterie au lithium-oxygène a un électrolyte comprenant un solvant organique et un médiateur redox à base d'iode ayant un couple I⁻/I₃⁻, dans lequel la teneur en eau de l'électrolyte d'une batterie entièrement chargée est de 3 à 6 % en poids.

2. Procédé selon la revendication 1, dans lequel le procédé comprend les étapes (i) et (ii) dans un cycle de décharge et de charge.

3. Procédé selon la revendication 2, dans lequel le procédé comprend 2 cycles ou plus, 5 cycles ou plus, 10 cycles ou plus, 50 cycles ou plus, 100 cycles ou plus, 500 cycles ou plus, 1 000 cycles ou plus, ou 2 000 cycles ou plus.

4. Procédé selon l'une quelconque des revendications précédentes, dans lequel LiOH est le produit de décharge prédominant dans l'étape de décharge.

5. Procédé selon l'une quelconque des revendications précédentes, dans lequel le produit de décharge est substantiellement exempt de Li₂O₂.

6. Procédé selon l'une quelconque des revendications précédentes, dans lequel LiOH est la source d'oxygène prédominante dans l'étape de charge.

7. Procédé selon l'une quelconque des revendications précédentes, dans lequel :
(i) le taux de cyclage dans l'étape de décharge et/ou de charge est dans la plage de 0,5 à 10 A/g, comme 1 à 5 A/g, comme 1 à 2 A/g ; et/ou
(ii) la capacité maximale d'une électrode de travail de la batterie au lithium-oxygène est dans la plage de 1 000 à 25 000 mAh/g, comme 1 000 à 10 000 mAh/g ; et/ou
(iii) la tension de charge à l'étape (i) est d'au plus 3,5 V, comme d'au plus 3,0 V, comme la tension de charge mesurée à une capacité d'électrode de 100 mAh/g ; et/ou
(iv) dans lequel la différence entre la tension de charge et la tension de décharge est de 0,4 V ou moins, comme 0,2 V ou moins, comme la tension de charge et la tension de décharge mesurées à une capacité d'électrode de 100 mAh/g.

8. Procédé selon l'une quelconque des revendications précédentes, dans lequel l'électrolyte comprend :
(i) un solvant d'éther dialkylique de polyalkylèneglycol, comme dans lequel l'électrolyte comprend un solvant monoglyme (DME), diglyme, triglyme ou tétraglyme (TEGDME), comme DME ; et/ou
ii) des ions lithium sous la forme de LiTFSI.

9. Procédé selon l'une quelconque des revendications précédentes, dans lequel la batterie au lithium-oxygène a une électrode de travail poreuse, comme une électrode de travail en carbone poreuse.

10. Procédé selon la revendication 9, dans lequel l'électrode de travail poreuse est :
(i) une électrode de travail macroporeuse, comme une électrode de travail en carbone macroporeuse, comme une électrode ayant une porosité d'au moins 50 m₂/g et/ou un volume de pores d'au moins 0,1 cm³/g, comme la porosité et le volume de pores déterminés par analyse isotherme d'adsorption de N₂ ; ou
(ii) sélectionnée parmi des électrodes de travail de rGO (oxyde de graphène réduit), de TiC (carbure de titane) et de SP (noir de carbone Super P), comme une électrode de rGO.

11. Batterie au lithium-oxygène entièrement chargée ayant un électrolyte comprenant un solvant organique et un médiateur redox à base d'iode ayant un couple I⁻/I₃⁻, dans laquelle la teneur en eau de l'électrolyte est de 3 à 6 % en poids.

12. Batterie au lithium-oxygène chargée selon la revendication 11, dans laquelle le solvant organique est un solvant d'éther dialkylique de polyalkylèneglycol, comme l'électrolyte comprend un solvant monoglyme (DME), diglyme, triglyme ou tétraglyme (TEGDME), comme DME.
